# EUROPEAN PATENT SPECIFICATION

(11) **EP 2 585 545 B1**
(45) Date of publication and mention of the grant of the patent: **26.04.2017**
(21) Application number: 10853799.4
(22) Date of filing: 24.06.2010
(51) Int. Cl.: C09D 11/02, C09B 29/16, C09B 62/04, B41J 2/01, C09B 67/26, C09B 47/26, C09B 5/14

(54) **INK SET AND INK SYSTEM FOR PRINTING AN IMAGE**
TINTENSATZ UND TINTENSYSTEM ZUM DRUCKEN EINES BILDES
ENSEMBLE D'ENCRES ET SYSTÈME D'ENCRES POUR IMPRIMER UNE IMAGE

(43) Date of publication of application: 01.05.2013
(73) Proprietor: Hewlett-Packard Development Company, L.P., Houston, TX 77070 (US)
(72) Inventor: KELLY, Niamh, Co Kildare (IE); MCSHANE, Paul, Co Kildare (IE); COYLE, Fiona, Co Kildare (IE)
(74) Representative: Beccarelli, Sandra Béatrice Yvonne
(86) International application number: PCT/US2010/039828
(87) International publication number: WO 2011/162761

(56) References cited:
- EP-A1- 1 788 043
- EP-A1- 1 985 668
- EP-A2- 0 588 316
- WO-A1-2005/105935
- WO-A1-2007/143556
- US-A1- 2003 061 963
- US-A1- 2005 087 100
- US-A1- 2006 201 381
- US-A1- 2007 022 903
- US-A1- 2007 181 034
- US-A1- 2010 075 112

## Description

### BACKGROUND

The present disclosure relates generally to ink sets and ink systems for printing an image.

Inkjet printing systems are commonly used as an effective way of producing images on a print medium, such as paper. Generally, ink droplets (formed from an ink that may, in some cases, be part of an ink set) are ejected from a nozzle at high speed by the inkjet system onto the paper to produce an image thereon. This image may include photos, graphics, text, or a combination thereof.

### BRIEF DESCRIPTION OF THE DRAWINGS

Features and advantages of embodiments of the present disclosure will become apparent by reference to the following detailed description and drawings, in which like reference numerals correspond to similar, though perhaps not identical, components. For the sake of brevity, reference numerals or features having a previously described function may or may not be described in connection with other drawings in which they appear.
Fig. 1 is a semi-schematic view of an ink system according to an embodiment of the present disclosure; and
Figs. 2, 3, and 4 are graphs depicting the relationship between the absorbance of the ink at a specified wavelength at its respective lambdaₘₐₓ at a 1-in-5000 dilution of ink in deionized water and the weight percent of the respective dye present in the respective ink for a yellow ink (Fig. 2), a magenta ink (Fig. 3), and a cyan ink (Fig. 4).

### DETAILED DESCRIPTION

US 20060201381 A1 describes an ink set for ink-jet imaging with six ink-jet inks, comprising black, cyan, magenta and yellow ink, each having an organic solvent system wherein at least two of the organic solvent systems are different.

An embodiment disclosed herein respectively claimed in claim 1 is an ink set, comprising: a yellow ink including a yellow dye, the yellow ink having a maximum absorption Lambda-max in the visible region ranging from 0.25 to 0.45 when measured at a wavelength ranging from 387 nm to 397 nm at a 1-in-5000 dilution of the yellow ink in deionized water when 4 wt% to 8 wt% of the yellow dye is present in the yellow ink; a magenta ink including a magenta dye, the magenta ink having a maximum absorption Lambda-max in the visible region ranging from 0.2 to 0.4 when measured at a wavelength ranging from 528 nm to 538 nm at a 1-in-5000 dilution of the magenta ink in deionized water when 4.5 wt% to 9 wt% of the magenta dye is present in the magenta ink; and a cyan ink including a cyan dye, the cyan ink having a maximum absorption Lambda-max in the visible region ranging from 0.15 to 0.4 when measured at a wavelength ranging from 606 nm to 617 nm at a 1-in-5000 dilution of the cyan ink in deionized water when 3 wt% to 8 wt% of the cyan dye is present in the cyan ink, wherein each of the magenta ink and the yellow ink further individually include an ink vehicle comprising: an organic solvent selected from 2-pyrrolidone, 1-(2-hydroxylethyl)-2- pyrrolidone, or a combination thereof, the organic solvent being present in the ink vehicle in an amount ranging from greater than 0 wt% to 8 wt%; at least one other organic solvent present in the ink vehicle in an amount ranging from 10 wt% to 20 wt%; at least one surfactant present in the ink vehicle in an amount ranging from 1 wt% to 5 wt%; and water; and wherein the cyan ink further includes an ink vehicle comprising: an organic solvent selected from 1-(2-hydroxyethyl)-2-pyrrolidone, the organic solvent being present in the ink vehicle in an amount ranging from 3 wt% to 8 wt%; at least one other organic solvent present in the ink vehicle in an amount ranging from 10 wt% to 20 wt%; at least one surfactant present in the ink vehicle in an amount ranging from 1 wt% to 5wt%; and water.

Embodiments of the ink set (and the ink system including the ink set), as disclosed herein, include a magenta ink, a cyan ink, and a yellow ink, where each ink advantageously exhibits improved serviceability with permanence when printed on a substrate, as well as desirable image quality when printed on different media (e.g., plain papers, swellable photo papers, porous photo papers, etc.). When printed, the inks also exhibit desirable color performance, at least in terms of color vibrancy and chroma.

As used herein, an ink that exhibits improved serviceability refers to an ink that does not interfere with the health and/or vitality of one or more components of a printer. The inks of the ink set do not degrade or otherwise contribute to degradation and/or partial or complete clogging/blocking of printhead nozzles of the printer during printing. For example, the inks of the ink set include ink components (e.g., ink vehicle components and/or colorants) that do not precipitate out of solution, which is generally caused, at least in part, to water vapor loss during the printing process. In many cases, precipitated ink components partially or even completely block or clog the printhead nozzles (which is often referred to as nozzle clogging). In another example, the inks of the ink set do not dry out and form crusts on the orifice plate, and thus do not partially cover and/or block the nozzles. Typically, a wick wiping action in the printer is required to pull ink out of the nozzles and remove crusted ink.

Furthermore, the inks of the ink set do not cause defects to a printing system from aerosol (i.e., droplets of ink that fail to land in an intended location on a substrate surface during printing). As such, the printing system does not have to include aerosol mitigators (e.g., an encoder shield for the paper encoder and/or an encoder brush for the carriage encoder). Additionally, residual ink of the ink set does not puddle on the orifice plate, and thus does not block or clog the nozzles. As such, the printing system does not have to frequently wipe the orifice plate to remove these puddles, and thus does not have to include wipers. Thus, for any of the examples set forth above, the nozzles of a printing system using embodiments of the inks/ink set disclosed herein are recovered with a spitting action.

The serviceability of the ink further refers to the reliability and recoverability of the ink across a variety of environmental conditions. In an example, the ink, when inside an inkjet pen, is serviceable at temperatures ranging from 15°C to 35°C at a relative humidity ranging from 20% to 80%. In another example, the ink, when in the bulk form, is stable (i.e., where the physical properties of the ink remain substantially unchanged (e.g., less than 10% variation)) at temperatures ranging from -40°C to 70°C. For example, if a printhead nozzle is exposed to air, the ink is formulated to recover relatively quickly upon spitting and recapping of the nozzle. As used herein, an ink that is recoverable infers that any degradation of the printing system caused by the ink is not permanent, and the speed of the recovery of the printing system (and thus the ink) is an indicator of the efficiency of the ink. In an example, a quick recovery of the ink means that less servicing of the printing system is required to return the printing system back to a desired operating state (e.g., spitting of the ink is used without having to include wick wiping action by the printer to clear off the orifice plate).

Further, the term "permanence," as used herein, is a property of the ink that defines its stability, i.e., the ability of the ink to remain on the substrate, when printed thereon, in an unchanged state. The permanence of the ink may be defined, for example, by its lightfastness (i.e., the ability of the ink to resist fading when exposed to light) or by its ozonefastness (i.e., the ability of the ink to resist fading when exposed to ozone). In some cases, the term lightfastness may be used interchangeably with the term lightfade, and the term ozonefastness may be used interchangeably with the term ozonefade. It is to be understood that permanence (in terms of lightfade and ozonefade) is measured by testing the ink set as a whole (i.e., all of the inks together), as opposed to testing one ink at a time. For example, the lightfade and ozonefade may be measured by observing (via the human eye) how the color of the inks fade or change hue.

Additionally, as used herein, an "effective amount" refers to the minimal amount of a substance and/or agent, which is sufficient to achieve a desired and/or required effect. For example, an effective amount of a "dye" is the minimum amount required to form an ink that, when printed on a substrate, demonstrates improved serviceability with permanence.

It is to be understood that the magenta ink, the cyan ink, and the yellow ink of the ink set disclosed herein are individually formulated to achieve the desired improved serviceability with permanence mentioned above. The inventors of the present disclosure have unexpectedly and fortuitously discovered that this desirable serviceability with permanence may be achieved by selecting, for each respective ink, a particular type of colorant, and combining that colorant with a particular vehicle formulation. It is to be understood that, in some embodiments of the ink set, one or more of the inks include a colorant defined by its/their ability to absorb light (referred to herein as its absorbance) at its/their wavelength of maximum absorption (λₘₐₓ) in the visible spectral region. In other embodiments of the ink set, the colorant is defined by its chemical structure.

The compositions of embodiments of the inks of the ink set will be described in further detail herein. It is to be understood that each of these inks exhibits improved serviceability (e.g., reduced nozzle blocking, improved reliability, improved recoverability, and improved print quality). Further, the inks are considered to be robust, at least to defects caused from exposure to light and/or ozone, which affect the permanence of the inks. Ozonefade may be measured, e.g., via ozone exposure testing conducted at 25°C and 50% relative humidity (RH), where 1 ppm of ozone with 40 ppm*hrs is considered to be equivalent to 1 year of real time exposure. The failure of a printed sample due to ozonefade had 30% loss in optical density measured from time zero. Lightfade may be measured, e.g., via light exposure testing using the color balance of three color ratios (e.g., cyan/magenta, cyan/yellow, and magenta/yellow). In an example, a ratio of color balance of greater than 0.15 or less than -0.15 is considered to be an objectionable shift in hue. Further, a pure color change that is greater than 20% to 35% is also considered to be objectionable. The light exposure testing may be conducted under glass at a temperature ranging from 23°C to 27°C and 50% RH and 60 kLux to 80 kLux, where 1971 kLux*hrs is considered to be an equivalent to one year of real time exposure. The color measurements referenced herein are performed using a D65 illuminant and a two (2) degree observer. The optical densities of the yellow ink, the magenta ink, and the cyan ink are measured using blue, green, and red filters, respectively. In an example, each of the inks according to embodiments of the present disclosure has a lightfade of greater than 50 years, and an ozonefade of greater than 8 years; while in another example, each of the inks has a lightfade of 76 years and an ozonefade of 13 years.

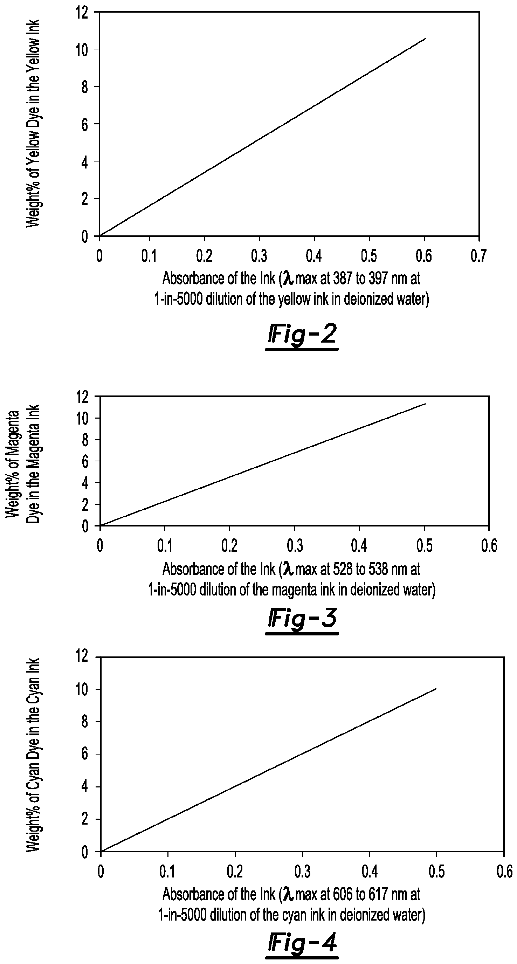

The yellow ink of the ink set will now be described herein. The yellow ink generally includes a yellow dye placed into an ink vehicle. In an embodiment, the yellow dye is selected from a water-based solution of a yellow-colored azo dye, and the yellow ink has a maximum absorption λₘₐₓ in the visible region ranging from 0.25 to 0.45 (at 4 wt% to 8 wt% yellow dye in the yellow ink) when measured at a wavelength ranging from 387 nm to 397 nm at a 1-in-5000 dilution of ink in deionized water (as shown in the graph of the yellow ink depicted in Fig. 2). In a further embodiment, the yellow ink has a maximum absorption λₘₐₓ in the visible region ranging from 0.29 to 0.41 (at 5 wt% to 7.2 wt% yellow dye in the yellow ink) when measured at a wavelength ranging from 387 nm to 397 nm.

An example of the yellow dye for the yellow ink is shown below as formula (A):

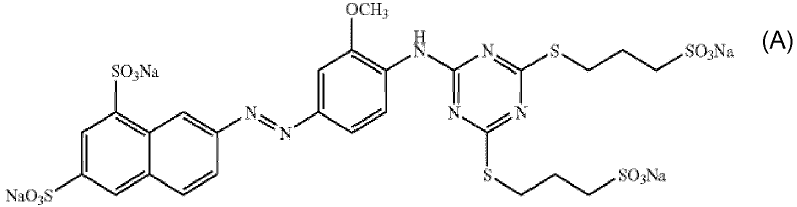

The IUPAC name for the yellow dye shown above in formula (A) is 1,3-naphthalenedisulfonic acid, 7-[[4-[[4,6-bis-[(3-sulfoprop-1-yl)thio]-1,3,5-triazin-2-yl]amino]-3-methoxyphenyl]azo] tetrasodium salt, and has the molecular formula C₂₆H₂₄N₆O₁₃S₆Na₄. This yellow dye is commercially available from Ilford Imaging (Australia), and is known by the tradename YELLOW Y-1189.

As used herein, the term "ink vehicle" refers to the combination of at least one or more solvents, one or more surfactants, and water to form a vehicle in which the colorant (e.g., the yellow dye) is placed to form an embodiment of the ink (e.g., the yellow ink). In some embodiments, the ink vehicle may include precipitating agents(s). In further embodiments, the ink vehicle may include additives such as a biocide, a buffering agent, and/or a chelating agent.

The inventors of the present disclosure have also found that the formulation of the ink vehicle, in addition to the selection of the colorant, also affects the serviceability and permanence of the ink when printed. It has further been found that the formulation of the ink vehicle is also dependent on the colorant selected. Thus, to achieve the improved serviceability with permanence, the ink vehicle for the respective ink (i.e., the yellow ink, the magenta ink, and the cyan ink) is also specific to that ink. It is to be understood that the ink vehicles for all of the inks have many similar components (e.g., surfactants, precipitating agents, etc.), but certain vehicle components (e.g., solvents) may be different.

Accordingly, in an embodiment, the ink vehicle for the yellow ink includes two or more organic solvents, one of which is selected from 2-pyrrolidone, 1-(2-hydroxylethyl)-2-pyrrolidone, or a combination of 2-pyrrdolidone and 1-(2-hydroxylethyl)-2-pyrrolidone. It is to be understood that, in some embodiments, when one of the 2-pyrrolidone or 1-(2-hydroxylethyl)-2-pyrrolidone is present in the ink vehicle, the other is not. The amount of either 2-pyrrolidone, or the 1-(2-hydroxylethyl)-2-pyrrolidone, or the combination of 2-pyrrdolidone and 1-(2-hydroxylethyl)-2-pyrrolidone present in the vehicle is the same. As such, in an example, the 2-pyrrolidone or the 1-(2-hydroxylethyl)-2-pyrrolidone is present in an amount ranging from 0 wt% to 8 wt% of the vehicle (noting that if one of the 2-pyrrolidone or the 1-(2-hydroxylethyl)-2-pyrrolidone is 0 wt%, the ink vehicle would not also contain 0 wt% of the other of the 2-pyrrolidone or the 1-(2-hydroxylethyl)-2-pyrrolidone). In another example, the amount of 2-pyrrolidone, 1-(2-hydroxylethyl)-2-pyrrolidone, or the combination of both present in the vehicle ranges from 4 wt% to 8 wt %. In a further example, the amount of 2-pyrrolidone, 1-(2-hydroxylethyl)-2-pyrrolidone, or the combination of both present in the vehicle ranges from 5.8 wt% to 7.1 wt %. In yet another example, the amount of 2-pyrrolidone, 1-(2-hydroxylethyl)-2-pyrrolidone, or the combination of both that is present in the ink vehicle is 6.5 wt%.

The other organic solvent(s) that may be used in the vehicle for the yellow ink are selected from, but are not limited to, nitrogen-containing heterocyclic ketones such as N-methyl-pyrrolid-2-one (NMP), 1,3-dimethylimidazolid-2-one, and octyl-pyrrolidone; diols such as ethanediols, (e.g., 1,2-ethanediol), propanediols (e.g., 1,2-propanediol, 1,3-propanediol, 2-ethyl-2-hydroxy-methyl-1,3-propanediol, 2-ethyl-2-hydroxymethyl-1,3--propanediol (EHPD), butanediols (e.g., 1,2-butanediol, 1,3-butanediol, 1,4-butanediol), pentanediols (e.g., 1,2-pentanediol, 1,5-pentanediol), hexanediols (e.g., 1,6-hexanediol, 2,5-hexanediol, 1,2-hexanediol), heptanediols (e.g., 1,2-heptanediol, 1,7-heptanediol), octanediols (e.g., 1,2-octanediol, 1,8-octanediol); glycol ethers and thioglycol ethers such as polyalkylene glycols, polyethylene glycols (e.g., diethylene glycol (DEG), triethylene glycol, tetraethylene glycol), polypropylene glycols (e.g., dipropylene glycol, tripropylene glycol, tetrapropylene glycol), polymeric glycols (e.g., PEG 200, PEG 300, PEG 400, PPG 400), and thiodiglycol; and combinations thereof.

In one embodiment, the ink vehicle for the yellow ink includes 1,5-pentanediol and trimethylolpropane, and the amount of other organic solvents (i.e., the 1,5-pentanediol and trimethylolpropane together) present in the ink vehicle ranges from 10 wt% to 20 wt%. In another embodiment, the amount of 1,5-pentanediol present in the ink vehicle ranges from 6 wt% to 10 wt%, and the amount of trimethylolpropane ranges from 5 wt% to 10 wt%. In yet a further example, the amount of 1,5-pentanediol present ranges from 6.8 wt% to 9.2 wt%, and the amount of trimethylolpropane present in the ink vehicle ranges from 6.4 wt% to 8.6 wt%. In still a further example, the amount of 1,5-pentanediol present is 8 wt%, and the amount of trimethylolpropane present in the ink vehicle is 7.5 wt%.

Surfactant(s) are generally used in the ink vehicle to assist in controlling various physical properties of the ink, such as surface tension, viscosity, jetting stability (e.g., in terms of bubble generation and firing) and bleeding.

Some non-limiting examples of suitable surfactants include nonionic surfactants such as secondary alcohol ethoxylates (e.g., those selected from the TERGITOL® series available from the Dow Chemical Company (Midland, MI) such as, e.g., TERGITOL® 15-S-5 and TERGITOL® 15-S-7). The secondary alcohol ethoxylates, if selected for one or more of the surfactants of the ink vehicle, contain i) an aliphatic chain having a prescribed number of carbon atoms in the chain, and ii) a prescribed number of ethoxylated units. These ethoxylates are commercially available as mixtures of ethoxylates, and may be described in terms of the predominance of a given compound. In an example, Tergitol 15-S-5 represents a secondary alcohol ethoxylate surfactant having 15 carbons in its aliphatic chain, and 5 ethoxylated units.

Further examples of surfactants that may be used in the vehicle include, but are not limited to, alkyldiphenyloxide disulfonate salts (e.g., those selected from the DOWFAX® series available from the Dow Chemical Company (Midland, Michigan) such as DOWFAX® 8390), phosphate esters (e.g., those selected from the CRODAFOS® series available from Croda Inc. (Edison, NJ)), nonionic fatty acid ethoxylate surfactants (e.g., Alkamul PSMO-20 available from Rhodia (France)), and fatty amide ethoxylate surfactants (e.g., Aldamide L203 available from Rhodia), anionic surfactants, nonionic alkyl polyethylene oxides, alkyl phenyl polyethylene oxides (such as those of the TRITON® series available from Rohm & Haas Co. (Philadelphic, PA)), polyethylene oxide block copolymers (PLURONIC® series available from BASF Co. (Florham Park, N.J.)), acetylenic polyethylene oxides (such as those of the SURFONYL® series available from Air Products (Allentown, PA)), polyethylene oxide esters, polyethylene oxide (di)esters, polyethylene oxide amines, protonated polyethylene oxide amines, protonated polyethylene oxide amides, dimethicone copolyols, substituted amine oxides, nonionic fluorosurfactants (such as those available from 3M Corp. (St. Paul, Minnesota)), oxetane-based fluorocarbon surfactants (such as those selected from the POLYFOX® series available from Omnova Solutions, Inc. (Fairlawn, OH), e.g., POLYFOX® PF-151 N, POLYFOX® PF-154N, POLYFOX® PF-156A, and POLYFOX® PF-159), and combinations thereof.

In an embodiment, the surfactant(s) are present in an amount ranging from 0.8 wt% to 5 wt% of the vehicle. In another example, the ink vehicle includes from 0.8 wt% to 1.2 wt% TERGITOL® 15-S-5, from 0.8 wt% to 1.2 wt% TERGITOL® 15-S-7, and from 0.3 wt% to 0.5 wt% DOWFAX® 8390.

The precipitating agent, if included, is a salt included in the ink vehicle that, when in contact with a black ink, causes the black colorant or a dispersing agent associated with the black colorant to precipitate, thereby alleviating black-to-color bleed. It is to be understood that, if the inks of the present ink set are not printed with black inks, the precipitating agent is not necessary. In an example, the precipitating agent may be a dispersing agent, examples of which include Ca(NO₃)₂, CaCl₂, Ca(CH₃COO)₂, Al(NO₃)₃, Nd(NO₃)₃, Y(NO₃)₃, Cu(NO₃)₂, CuCl₂, CoCl₂, Co(NO₃)₂, NiCl₂, Ni(NO₃)₂, MgCl₂, MgBr₂, MgSO₄, Mg(CH₃COO)₂, and Mg(NO₃)₂. In an embodiment, the amount of the precipitating agent ranges from 0 wt% to 4 wt% of the vehicle. In another embodiment, the amount of the precipitating agent ranges from 1 wt% to 2 wt% of the vehicle.

It is to be understood that other multi-valent metal salts derived from the above-listed cations and anions may also be used as the precipitating agent in the ink vehicle. It is further to be understood that the principles of general chemistry often dictate the combinations that may be most appropriate for the ink vehicle.

It is yet further to be understood that, in some instances, the pH of the ink may have to be adjusted so that the pH falls within a desired range. In an example, the pH ranges from 6 to 8. In instances where the pH is greater than 8, for example, the pH of the ink may be adjusted downwardly using an acid (such as, e.g., HNO₃). Likewise, if the pH is lower than, e.g., 6, the pH may be adjusted upwardly using a base (such as, e.g., NaOH). The amount and the type of pH adjusting agent selected may be based, at least in part, on chemical practice that is generally known in the art.

In an embodiment, the yellow ink vehicle further includes one or more additives selected from biocides, chelating agents, and/or buffering agents. The biocide may be added to the ink to protect the ink from bacterial growth and fungi. One example of a suitable biocide is Proxel® GXL, and this component may be present in an amount ranging from 0.1 wt% to 0.5 wt% of the ink vehicle. In another example, the amount of biocide present in the ink vehicle is 0.18%.

A chelating agent, such as EDTA disodium salt, may be added to the ink vehicle to reduce or prevent kogation of the yellow ink. Some more specific examples of chelating agents that may be used include, but are not limited to, those having a coordination number of 2 (e.g., glycine, ethylenediamine, propylenediamine, and lactic acid), a coordination number of 3 (e.g., iminodiacetic acid and diethylenetriamine), a coordination number of 4 (e.g., dihydroxyethylglycine, hydroxyethyliminodiacetic acid, and nitrilotriacetic acid), a coordination number of 5 (e.g., ethylenediaminetetraacetic acid and hydroxyethylethylenediaminetetraacetic acid), a coordination number of 6 (such as diethylenetriaminepentaacetic acid), and a coordination number of 7 (such as triethylenetetraminehexaacetic acid). The chelating agent, if used in the ink vehicle, is present in an amount ranging from 0.001 wt% to 0.3 wt%. In another example, the amount of the chelating agent present is 0.0075 wt% of the vehicle.

Further, the buffering agent may be used in the ink vehicle to modulate the pH of the ink so that the pH stays between 6.0 and 8.0, and in some cases between 6.5 and 7.0. Some non-limiting examples of buffering agents include Trizma Base, available from Aldrich Chemical (Milwaukee, Wisconsin), 2-(N-morpholino)ethanesulfonic acid (MES), and 3-(N-morpholino)propanesulfonic acid (MOPS). The buffering agent, if used in the ink vehicle, may be present in an amount ranging from 0.1 wt% to 0.3 wt% of the vehicle. In another example, the amount of the buffering agent is 0.2 wt% of the vehicle.

The balance of the ink vehicle includes water. In a non-limiting example, the amount of water present ranges from 60 wt% to 80 wt% of the vehicle.

A specific example of the vehicle for the yellow ink has the following formulation:
6 wt% to 10 wt% 1,5-pentanediol;
5 wt% to 10 wt% trimethylolpropane;
up to 8 wt% 2-pyrrolidone;
0.2 wt% MES buffering agent;
0.5 wt% to 3 wt% TERGITOL® 15-S-5;
0.5 wt% to 3 wt% TERGITOL® 15-S-7;
0.1 wt% to 2 wt% DOWFAX® 8390;
0.01 wt% EDTA disodium salt;
up to 4 wt% Mg(NO₃)₂*6H₂O;
0.18 wt% PROXEL® GXL; and
the balance water.

The yellow ink may be made, for example, by making the ink vehicle, and then placing an effective amount of the yellow dye in the ink vehicle. In an embodiment, the effective and nominal amount of the yellow dye in the yellow ink ranges from 4 wt% to 8 wt%. In another example, the effective and nominal amount of the yellow dye in the yellow ink is 6 wt%.

The magenta ink of the ink set includes a magenta dye placed into an ink vehicle. In an embodiment, the magenta dye is selected from a water-based solution including a magenta-colored anthrapyridone dye, and the magenta ink has a maximum absorbance λₘₐₓ in the visible region ranging from 0.2 to 0.4 (at 4.5 wt% to 9 wt% magenta dye in the magenta ink) when measured at a wavelength ranging from 528 nm to 538 nm at a 1-in-5000 dilution of ink in deionized water (as shown in the graph of the magenta ink depicted in Fig. 3). In another embodiment, the magenta ink has a maximum absorbance λₘₐₓ in the visible region ranging from 0.23 to 0.37 (at 5.2 wt% to 8.4 wt% magenta dye in the magenta ink) when measured at a wavelength ranging from 528 nm to 538 nm.

An example of the magenta dye for the magenta ink is shown below as formula (B):

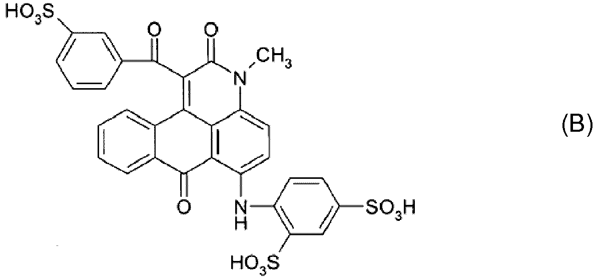

Formula (B) above is shown in its acid form. It is to be understood, however, that this magenta dye may also be used in its salt form such as, but not limited to P, S, Li, and NH₄ salts.

The ink vehicle of the magenta ink is also specifically formulated so that the ink achieves the improved serviceability with permanence when printed on a substrate. In an embodiment, the components of the ink vehicle for the magenta ink are the same as those for the yellow ink. To briefly reiterate from above, the ink vehicle includes two or more organic solvents, one of which is selected from 2-pyrrolidone or 1-(2-hydroxylethyl)-2-pyrrolidone. The other organic solvent(s) may be selected from any of the other organic solvents disclosed above for the yellow ink. In a specific example, the other organic solvents for the vehicle are selected from 1,5-pentanediol and trimethylolpropane. In an example, the 2-pyrrolidone, the 1-(2-hydroxylethyl)-2-pyrrolidone, or a combination thereof is present in an amount ranging from 0 wt% to 8 wt% (noting, as above, that not both of the 2-pyrrolidone and the 1-(2-hydroxylethyl)-2-pyrrolidone may be present at 0 wt%). In another example, the amount of 2-pyrrolidone, or the 1-(2-hydroxylethyl)-2-pyrrolidone, or the combination thereof present in the vehicle ranges from 4 wt% to 8 wt%. In a further example, the amount of 2-pyrrolidone, or the 1-(2-hydroxylethyl)-2-pyrrolidone, or the combination thereof present in the vehicle ranges from 5.8 wt% to 7.1 wt%. In yet another example, the amount of 2-pyrrolidone, or the 1-(2-hydroxylethyl)-2-pyrrolidone, or the combination thereof present in the ink vehicle is 6.5 wt%. The other solvent(s) together are present in an amount ranging from 10 wt% to 20 wt% of the ink vehicle. In another embodiment, the amount of 1,5-pentanediol present in the ink vehicle ranges from 6 wt% to 10 wt%, and the amount of trimethylolpropane ranges from 5 wt% to 10 wt%. In yet a further example, the amount of 1,5-pentanediol present ranges from 6.8 wt% to 9.2 wt%, and the amount of trimethylolpropane present in the ink vehicle ranges from 6.4 wt% to 8.6 wt%. In still a further example, the amount of 1,5-pentanediol present in the ink vehicle is 8 wt%, and the amount of trimethylolpropane present in the ink vehicle is 7.5 wt%.

The ink vehicle for the magenta ink also includes at least one surfactant present in an amount ranging from 1 wt% to 5 wt%, a precipitating agent present in an amount ranging from 0 wt% to 4 wt%, and water. In some embodiments, the ink vehicle further includes one or more additives selected from biocides, chelating agents, and buffering agents. Again, any of the examples of the surfactants, precipitating agents, and additives (including any of the ranges in wt%) disclosed above for the yellow ink may also be used in the ink vehicle of the magenta ink. Furthermore, the amount of the surfactant(s) and the precipitating agent used in the vehicle for the yellow ink is also the same for the magenta ink. However, the amount of the chelating agent for the magenta ink is present in an amount ranging from 0 wt% to 0.5 wt%, and the amount of the biocide for the magenta ink vehicle ranges from 0.001 wt% to 0.3 wt%.

A specific example of the ink vehicle for the magenta ink has the following formulation:
6 wt% to 10 wt% 1,5-pentanediol;
5 wt% to 10 wt% trimethylolpropane;
up to 8 wt% 2-pyrrolidone;
0.2 wt% MES buffering agent;
0.5 wt% to 3 wt% TERGITOL® 15-S-5;
0.5 wt% to 3 wt% TERGITOL® 15-S-7;
0.1 wt% to 2 wt% DOWFAX® 8390;
0.10 wt% EDTA disodium salt;
up to 4 wt% Mg(NO₃)₂*6H₂O;
0.18 wt% PROXEL® GXL; and
the balance water.

The magenta ink may be made, for example, by making the ink vehicle, and then placing an effective amount of the magenta dye in the ink vehicle. In an embodiment, the effective and nominal amount of the magenta dye in the magenta ink ranges from 4.5 wt% to 9 wt%. In another example, the effective and nominal amount of the magenta dye in the magenta ink is 6.2 wt% (at which weight percent the maximum absorption λₘₐₓ in the visible region is 0.28).

The cyan ink of the ink set includes a cyan dye placed in an ink vehicle. In an embodiment, the cyan dye is selected from a water-based solution including a cyan-colored pyridine carboxylic acid substituted copper pthalocyanine dye, and the cyan ink has a maximum absorption λₘₐₓ in the visible region ranging from 0.15 to 0.4 (at 3 wt% to 8 wt% cyan dye in the cyan ink) when measured at a wavelength ranging from 606 nm to 617 nm at a 1-in-5000 dilution of ink in deionized water (as shown in the graph of the cyan ink depicted in Fig. 4). In a further embodiment, the cyan ink has a maximum absorption λₘₐₓ in the visible region ranging from 0.18 to 0.3 (at 3.6 wt% to 6 wt% cyan dye in the cyan ink) when measured at a wavelength ranging from 606 nm to 617 nm.

An example of the cyan dye for the cyan ink is shown below as formula (C): 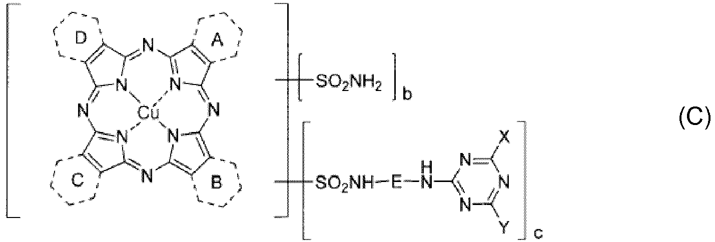 where: i) rings A through D independently represent benzene rings or 6-membered, nitrogen-containing heterocyclic aromatic rings condensed to a porphyrazine ring, and the mean number of nitrogen-containing heterocyclic aromatic rings is greater than 0 but less than 1 while the remaining are benzene rings; ii) E is an alkylene group; iii) X and Y are independently aniline groups or naphthylamino groups independently having at least a sulfo group, a carboxy group, or a phosphonic acid group as a substituent, wherein the aniline groups or the naphthylamino groups may include at least an additional substituent selected from sulfo groups, carboxy groups, phosphonic acid groups, sulfamoyl groups, carbamoyl groups, hydroxy groups, alkoxy groups, amino groups, monoalkylamino groups"dialkylamino groups, monoarylamino groups, diarylamino groups, acetylamino groups, ureide groups, alkyl groups, nitro groups, cyano groups, halogen atoms, alkylsulfonyl groups, alkylthio groups, aryloxy groups and heterocyclic groups; iv) the mean value of b is equal to or greater than 0 but less than 3.9, the mean value of c is equal to or greater than 0.1 but less than 4, and the mean value of the sum of b and c is equal to or greater than 3 but less than 4.

One specific example of the cyan dye having the formula (C) is shown below as formula (D): 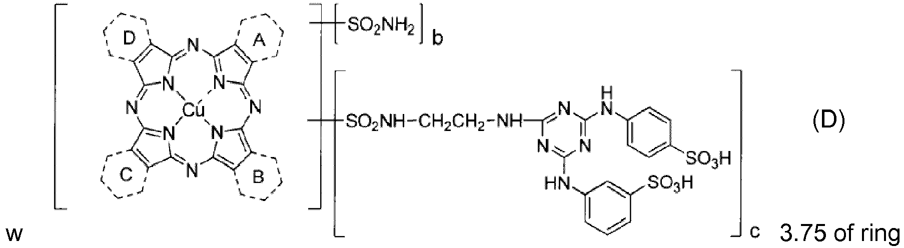 A through ring D is a benzene ring, b is 2.91, and c is 0.84.

Yet another example of the cyan dye having the formula (C) is also shown as the formula (D) above, but 0.65 of ring A through ring D is a pyridine ring, and the remaining 3.35 of ring A through ring D is a benzene ring, b is 2.49, and c is 0.86.

Yet a further example of the cyan dye having the formula (C) is also shown as the formula (D) above, but 0.75 of ring A through ring D is a pyridine ring, and the remaining 3.25 of ring A through ring D is a benzene ring, b is 2.42, and c is 0.83.

Still another example of the cyan dye having the formula (C) is also shown as the formula (D) above, but 0.85 of ring A through ring D is a pyridine ring, and the remaining 3.15 of ring A through ring D is a benzene ring, b is 2.31, and c is 0.84.

The ink vehicle of the cyan ink is also specifically formulated so that the cyan ink (like the yellow ink and the magenta ink) can achieve the improved serviceability with permanence when printed on a substrate. In an embodiment, the ink vehicle for the cyan ink may be the same as for the yellow and magenta inks described above. However, in a further embodiment, the ink vehicle for the cyan ink is slightly different (in terms of vehicle components) than the ink vehicle for the yellow ink and the magenta ink. More specifically, the ink vehicle for the cyan ink includes all of the same components as the ink vehicle for the yellow ink and the magenta ink, except that 1-(2-hydroxyethyl)-2-pyrrolidone is selected (instead of 2-pyrrolidone, or a combination of 1-(2-hydroxyethyl)-2-pyrrolidone and 2-pyrrolidone) as one of the organic solvents. In an example, the 1-(2-hydroxyethyl)-2-pyrrolidone is present in an amount ranging from 3 wt% to 8 wt%. In another example, the amount of 1-(2-hydroxyethyl)-2-pyrrolidone present in the vehicle ranges from 4 wt% to 8 wt %. In a further example, the amount of 1-(2-hydroxyethyl)-2-pyrrolidone present in the vehicle ranges from 5.8 wt% to 7.2 wt %. In yet another example, the amount of 1-(2-hydroxyethyl)-2-pyrrolidone present is 6.5 wt% of the vehicle. The other solvent(s) together are present in an amount ranging from 10 wt% to 20 wt% of the ink vehicle. In another embodiment, the amount of 1,5-pentanediol present in the ink vehicle ranges from 6 wt% to 10 wt%, and the amount of trimethylolpropane ranges from 5 wt% to 10 wt%. In yet a further example, the amount of 1,5-pentanediol present ranges from 6.8 wt% to 9.2 wt%, and the amount of trimethylolpropane present in the ink vehicle ranges from 6.4 wt% to 8.6 wt%. In still a further example, the amount of 1,5-pentanediol present in the ink vehicle is 8 wt%, and the amount of trimethylolpropane present in the ink vehicle is 7.5 wt%.

All of the other components (i.e., the other solvent(s), surfactant(s), precipitating agent, additives, and water) of the ink vehicles for the yellow ink and the magenta ink may be used in the ink vehicle for the cyan ink. Furthermore, the amount of the surfactant(s) and the precipitating agent used in the vehicle for the yellow ink is also the same for the cyan ink. However, in an embodiment, the amount of the chelating agent for the cyan ink vehicle ranges from 0 wt% to 0.3 wt%, and the biocide is present in the cyan ink vehicle in an amount up to 0.5 wt%.

A specific example of the ink vehicle for the cyan ink has the following formulation:
6 wt% to 10 wt% 1,5-pentanediol;
5 wt% to 10 wt% trimethylolpropane;
up to 8 wt% 1-(2-hydroxyethyl)-2-pyrrolidone;
0.2 wt% MES buffering agent;
0.5 wt% to 3 wt% TERGITOL® 15-S-5;
0.5 wt% to 3 wt% TERGITOL® 15-S-7;
0.1 wt% to 2 wt% DOWFAX® 8390;
0.01 wt% to 0.3 wt% EDTA disodium salt;
up to 4 wt% Mg(NO₃)₂*6H₂O;
0.18 wt% PROXEL® GXL; and
the balance water.

The cyan ink may be made, for example, by making the ink vehicle, and then placing an effective amount of the cyan dye in the ink vehicle. In an embodiment, the effective and nominal amount of the cyan dye in the cyan ink ranges from 3 wt% to 8 wt%. In another example, the effective and nominal amount of the cyan dye is 4.4 wt% (at which weight percent the maximum absorption λₘₐₓ in the visible region is 0.22).

It is to be understood that the inks described hereinabove may be made by combining the dye and the ink vehicle in any desired and suitable manner.

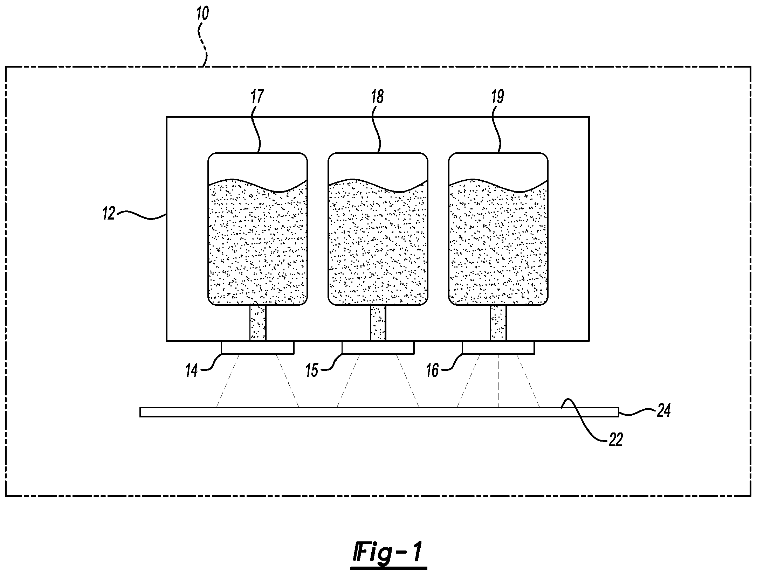

Further, embodiments of the inks of the ink set disclosed hereinabove may be considered to be dye-based inks that are configured to be inkjet printed. Printing may be accomplished via an inkjet printer, examples of which include thermal inkjet printers, piezoelectric inkjet printers, continuous inkjet printers, and combinations thereof. In an example, the printer is part of an ink system 10, which is semi-schematically shown in Fig. 1.

Referring now to Fig. 1, the ink system 10 generally includes the printer 12 having three inkjet fluid ejectors 14, 15, 16. Each of the fluid ejectors 14, 15, 16 is fluidically coupled to respective chambers 17, 18, 19, which are operatively positioned inside the printer 12. In a non-limiting example, one of the chambers of the system 10 (e.g., the chamber 17) contains the yellow ink, while another one of the chambers (e.g., the chamber 18) contains the magenta ink, while yet the last of the three chambers (e.g., the chamber 19) contains the cyan ink. Each of the fluid ejectors 14, 15, 16 is configured to eject its respective ink onto a surface 22 of a print media 24, where the inks are retrieved from their respective chambers 17, 18, 19 during printing.

It is to be understood that the printer 12 may also include additional fluid ejectors (not shown in Fig. 1), each of which is fluidically coupled to at least one other chamber (also not shown in Fig. 1). For example, the ink system 10 may include an ink set having the three inks and a fixer composition (e.g., in instances where the ink set is used to print on media other than plain papers and/or photo papers mentioned above), each of which is stored in a respective chamber. Further, the at least one other chamber may alternately contain a black ink, if desired. In either of these cases, the printer 12 would include four fluid ejectors and four chambers, although it is to be understood that any suitable or desired number of fluid ejectors and chambers may be used. It is to be understood that the ink chambers may be in fluid communication with a single fluid ejector, or may be in fluid communication with their own respective fluid ejectors.

Embodiments of the inks of the ink set disclosed hereinabove exhibit permanence at or above threshold levels (i.e., lightfade greater than 50 years, and ozonefade greater than 8 years). Further, embodiments of the magenta, cyan, and yellow inks are serviceable, whereby any defects to the nozzles (such as nozzle clogging, etc.) may be recovered through minimal or less servicing (e.g., using a spitting action to recover the nozzles). Additionally, the ink set according to an embodiment of the present disclosure met the threshold for print/image quality (which is related to nozzle health) such that less than or equal to five nozzles per page were missing; and if more than five nozzles per page were missing, this occurred in less than 10% of the pages printed. In another embodiment of the ink set of the present disclosure, less than or equal to three nozzles per page were missing; and if more than three nozzles per page were missing, this occurred in less than 10% of the pages printed. Further, the ink set according to embodiments of the present disclosure is generally more robust and/or performs well under various environmental conditions (e.g., hot temperatures (e.g., up to 35°C) or cold temperatures (e.g., down to 15°C) for inks inside an inkjet pen).

Concentrations, amounts, wavelengths, and other numerical data have been presented herein in a range format. It is to be understood that this range format is used merely for convenience and brevity and should be interpreted flexibly to include not only the numerical values explicitly recited as the limits of the range, but also to include all the individual numerical values or sub-ranges encompassed within that range as if each numerical value and sub-range is explicitly recited. For example, a weight range of 1 wt% to 20 wt% should be interpreted to include not only the explicitly recited concentration limits of 1 wt% to 20 wt%, but also to include individual concentrations such as 2 wt%, 3 wt%, 4 wt%, etc., and sub-ranges such as 5 wt% to 15 wt%, 10 wt% to 20 wt%, etc.

## Claims

1. An ink set, comprising:
a yellow ink including a yellow dye, the yellow ink having a maximum absorption _{λmax} in the visible region ranging from 0.25 to 0.45 when measured at a wavelength ranging from 387 nm to 397 nm at a 1-in-5000 dilution of the yellow ink in deionized water when 4 wt% to 8 wt% of the yellow dye is present in the yellow ink;
a magenta ink including a magenta dye, the magenta ink having a maximum absorption λₘₐₓ in the visible region ranging from 0.2 to 0.4 when measured at a wavelength ranging from 528 nm to 538 nm at a 1-in-5000 dilution of the magenta ink in deionized water when 4.5 wt% to 9 wt% of the magenta dye is present in the magenta ink; and
a cyan ink including a cyan dye, the cyan ink having a maximum absorption λₘₐₓ in the visible region ranging from 0.15 to 0.4 when measured at a wavelength ranging from 606 nm to 617 nm at a 1-in-5000 dilution of the cyan ink in deionized water when 3 wt% to 8 wt% of the cyan dye is present in the cyan ink,
wherein each of the magenta ink and the yellow ink further individually include an ink vehicle comprising:
an organic solvent selected from 2-pyrrolidone, 1-(2-hydroxylethyl)-2-pyrrolidone, or a combination thereof, the organic solvent being present in the ink vehicle in an amount ranging from greater than 0 wt% to 8 wt%;
at least one other organic solvent present in the ink vehicle in an amount ranging from 10 wt% to 20 wt%;
at least one surfactant present in the ink vehicle in an amount ranging from 1 wt% to 5 wt%; and
water; and
wherein the cyan ink further includes an ink vehicle comprising:
an organic solvent selected from 1-(2-hydroxyethyl)-2-pyrrolidone, the organic solvent being present in the ink vehicle in an amount ranging from 3 wt% to 8 wt%;
at least one other organic solvent present in the ink vehicle in an amount ranging from 10 wt% to 20 wt%;
at least one surfactant present in the ink vehicle in an amount ranging from 1 wt% to 5 wt%; and
water,

2. The ink set as defined in claim 1 wherein the yellow dye is selected from an azo dye having formula (A):

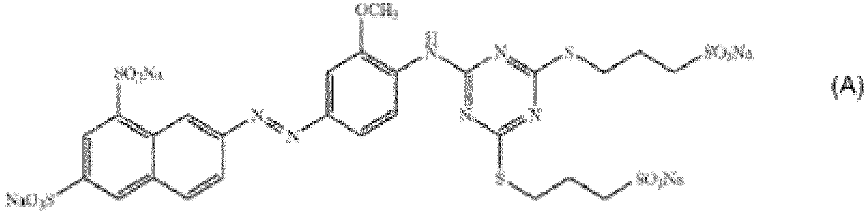

3. The ink set as defined in claim 1 wherein the magenta dye is selected from an anthrapyridone dye having formula (B):

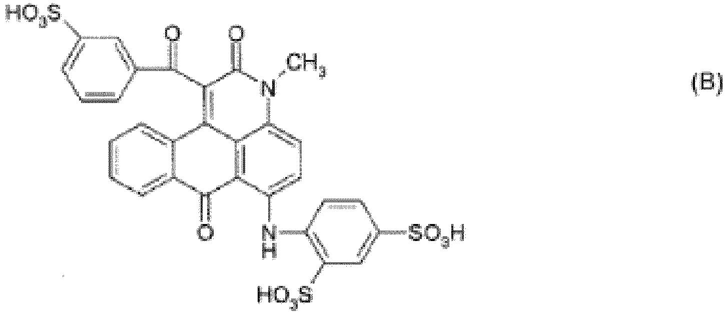

4. The ink set as defined in claim 1 wherein the cyan dye is a pyridine carboxylic acid substituted copper pthalocyanine dye having formula (D): 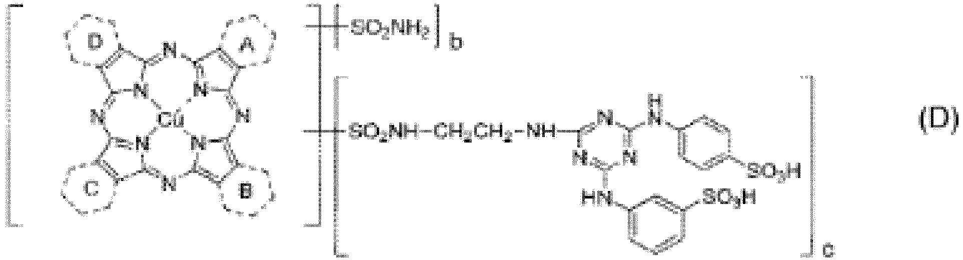 wherein 0.25 of ring A through ring D is a pyridine ring and the remaining 3.75 of ring A through ring D is a benzene ring, b is 2.91, and c is 0.84;
or wherein 0.65 of ring A through ring D is a pyridine ring and the remaining 3.35 of ring A through ring D is a benzene ring, b is 2.49, and c is 0.86;
or wherein 0.75 of ring A through ring D is a pyridine ring and the remaining 3.25 of ring A through ring D is a benzene ring, b is 2.42, and c is 0.83;
or wherein 0.85 of ring A through ring D is a pyridine ring and the remaining 3.15 of ring A through ring D is a benzene ring, b is 2.31, and c is 0.84.

5. The ink set as defined in claim 1 wherein the ink vehicle further comprises a precipitating agent present in the ink vehicle in an amount ranging from 0 wt% to 4 wt%.

6. The ink set as defined in claim 1 wherein one or more of the ink vehicles of the magenta ink, the yellow ink, and the cyan ink further comprises at least one additive selected from a biocide, a chelating agent, and a buffering agent.

7. An ink set, comprising:
a yellow ink including a yellow dye selected from an azo dye having formula (A): 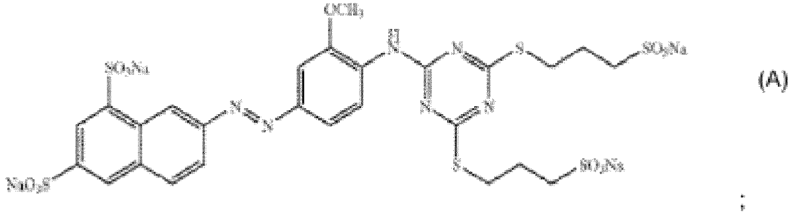
a magenta ink including a magenta dye selected from an anthrapyridone dye having formula (B): 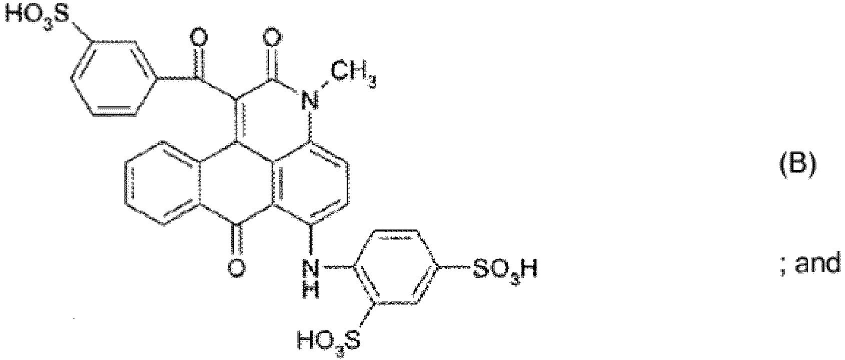
a cyan ink selected from a pyridine carboxylic acid substituted copper pthalocyanine dye having formula (C): 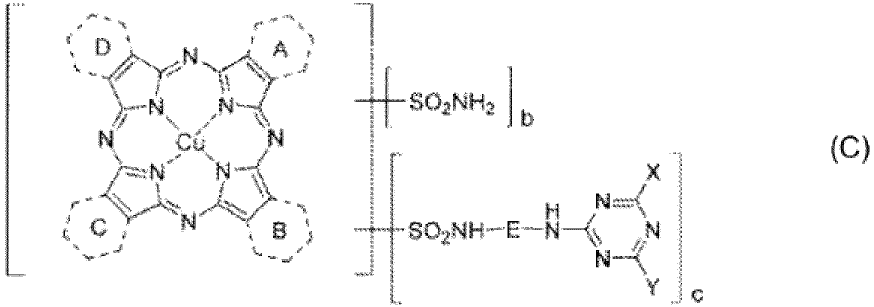 wherein: i) rings A through D represent independently benzene rings or 6-membered, nitrogen-containing heterocyclic aromatic rings condensed to a porphyrazine ring, and the mean number of nitrogen-containing heterocyclic aromatic rings is greater than 0 but less than 1 while the remaining are benzene rings; ii) Eis an alkylene group; iii) X and Y are independently aniline groups or naphthylamino groups independently having at least a sulfa group, a carboxy group, or a phosphonic acid group as a substituent; iv) the mean value of b is greater than or equal to 0 but less than 3.9, the mean value of c is greater than or equal to 0.1 but less than 4, and the mean value of the sum of b and c is greater than or equal to 3 but less than 4.

8. The ink set as defined in claim 7 wherein the aniline groups or the naphthylamino groups include at least an additional substituent selected from sulfo groups, carboxy groups, phosphonic acid groups, sulfamoyl groups, carbamoyl groups, hydroxy groups, alkoxy groups, amino groups, monoalkylamino groups, dialkylamino groups, monoarylamino groups, diarylamino groups, acetylamino groups, ureide groups, alkyl groups, nitro groups, cyano groups, halogen atoms, alkylsulfonyl groups, alkylthio groups, aryloxy groups, and heterocyclic groups.

9. The ink set as defined in any of claims 7 and 8 wherein the magenta dye is present in the magenta ink in an amount ranging from 4.5 wt% to 9 wt% and the yellow dye is present in the yellow ink in an amount ranging from 4 wt% to 8 wt%, and wherein the magenta ink and the yellow ink individually further include an ink vehicle comprising:
1,5-pentanediol present in the ink vehicle in an amount ranging from 6 wt% to 10 wt%;
trimethylolpropane present in the ink vehicle in an amount ranging from 5 wt% to 10 wt%;
2-pyrrolidone, 1-(2-hydroxylethyl)-2-pyrrolidone, or a combination thereof present in the ink vehicle in an amount ranging from greater than 0 wt% to 8 wt%;
at least one nonionic surfactant present in the ink vehicle in an amount ranging from 1 wt% to 5 wt%; and
water;
and wherein the cyan dye is present in the cyan ink in an amount ranging from 3 wt% to 8 wt%, and wherein the cyan ink further includes an ink vehicle comprising:
1,5-pentanediol present in the ink vehicle in an amount ranging from 6 wt% to 10 wt%;
trimethylolpropane present in the ink vehicle in an amount ranging from 5 wt% to 10 wt%;
1-(2-hydroxyethyl)-2-pyrrolidone present in the ink vehicle in an amount ranging from 3 wt% to 8 wt%;
at least one nonionic surfactant present in the ink vehicle in an amount ranging from 1 wt% to 5 wt%; and
water,

10. The ink set as defined in any of claims 7 through 9 wherein E of the cyan dye of formula (C) is ethylene, X is a 3-sulfoanilino group, and Y is a 4-sulfoanilino group, thereby rendering formula (D): 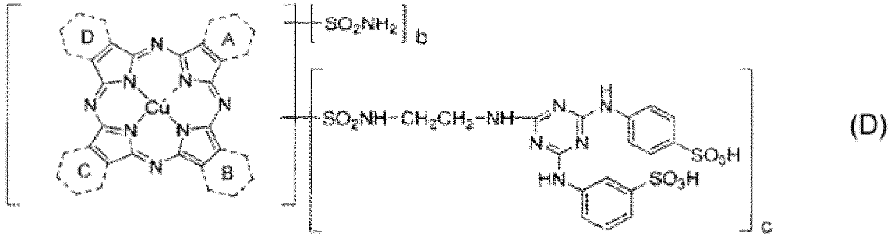 wherein 0.25 of ring A through ring D of formula (D) is a pyridine ring and the remaining 3.75 of ring A through ring D is a benzene ring, b is 2.91, and c is 0.84;
or wherein 0.65 of ring A through ring D of formula (D) is a pyridine ring and the remaining 3.35 of ring A through ring D is a benzene ring, b is 2.49, and c is 0.86;
or wherein 0.75 of ring A through ring D of formula (D) is a pyridine ring and the remaining 3.25 of ring A through ring D is a benzene ring, b is 2.42, and c is 0.83;
or wherein 0.85 of ring A through ring D of formula (D) is a pyridine ring and the remaining 3.15 of ring A through ring D is a benzene ring, b is 2.31, and c is 0.84.

11. An ink system, comprising:
a first ink chamber including a yellow ink, comprising:
a yellow dye selected from an azo dye having formula (A): 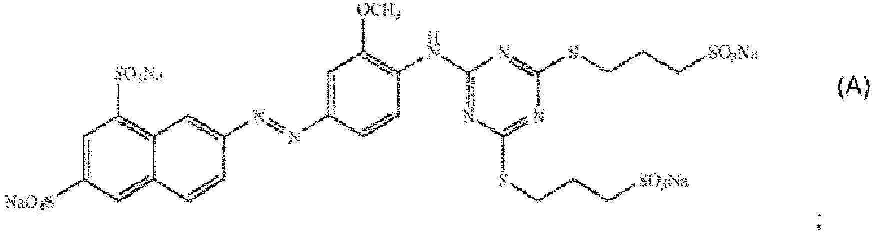 and
a first ink vehicle, comprising:
1,5-pentanediol present in the ink vehicle in an amount ranging from 6 wt% to 10 wt%;
trimethylolpropane present in the ink vehicle in an amount ranging from 5 wt% to 10 wt%;
2-pyrrolidone, 1-(2-hydroxylethyl)-2-pyrrolidone, or a combination thereof present in the ink vehicle in an amount ranging from greater than 0 wt% to 8 wt%;
at least one nonionic surfactant present in the ink vehicle in an amount ranging from 1 wt% to 5 wt%; and
water; and
a second ink chamber including a magenta ink, comprising:
a magenta dye selected from an anthrapyridone dye having formula (B): 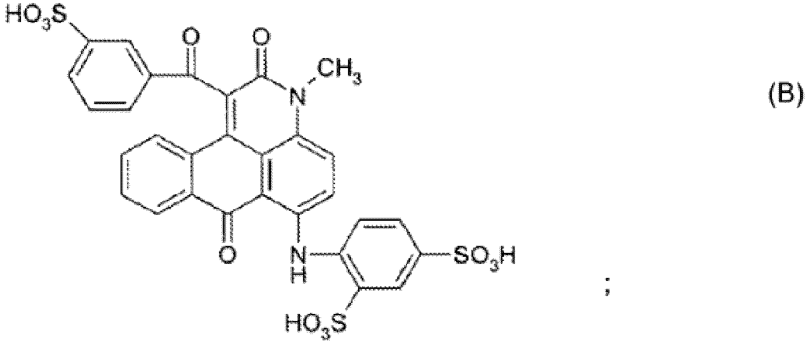 and
a second ink vehicle, comprising:
1,5-pentanediol present in the ink vehicle in an amount ranging from 6 wt% to 10 wt%;
trimethylolpropane present in the ink vehicle in an amount ranging from 5 wt% to 10 wt%;
2-pyrrolidone, 1-(2-hydroxylethyl)-2-pyrrolidone, or a combination thereof present in the ink vehicle in an amount ranging from greater than 0 wt% to 8 wt%;
at least one nonionic surfactant present in the ink vehicle in an amount ranging from 1 wt% to 5 wt%; and
water; and
a third ink chamber including a cyan ink, comprising:
a cyan dye selected from a pyridine carboxylic acid substituted copper pthalocyanine dye having formula (C): 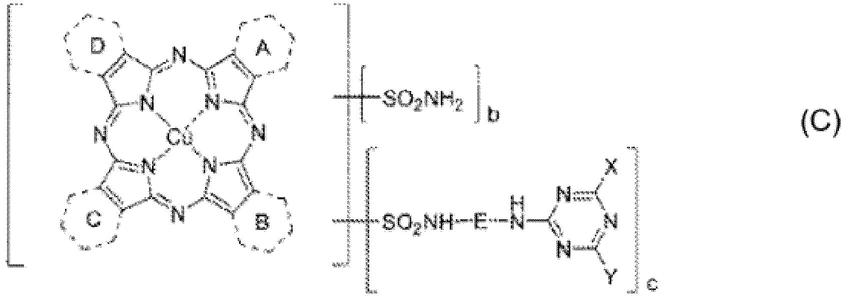
wherein: i) rings A through D represent independently benzene rings or 6-membered, nitrogen-containing heterocyclic aromatic rings condensed to a porphyrazine ring, and the mean number of nitrogen-containing heterocyclic aromatic rings is greater than 0 but less than 1 while the remaining are benzene rings; ii) E is an alkylene group; iii) X and Y are independently aniline groups or naphthylamino groups having at least a sulfo group, a carboxy group, or a phosphonic acid group as a substituent; iv) the mean value of b is greater than or equal to 0 but less than 3.9, the mean value of c is greater than or equal to 0.1 but less than 4, and the mean value of the sum of b and c is greater than or equal to 3 but less than 4; and
a third ink vehicle, comprising:
1,5-pentanediol present in the ink vehicle in an amount ranging from 6 wt% to 10 wt%;
trimethylolpropane present in the ink vehicle in an amount ranging from 5 wt% to 10 wt%;
1-(2-hydroxyethyl)-2-pyrrolidone present in the ink vehicle in an amount ranging from 3 wt% to 8 wt%;
at least one nonionic surfactant present in the ink vehicle in an amount ranging from 1 wt% to 5 wt%; and
water.

12. The ink set as defined in claim 11 wherein E of the cyan dye of formula (C) is ethylene, X is a 3-sulfoanilino group, and Y is a 4-sulfoanilino group, thereby rendering formula (D): 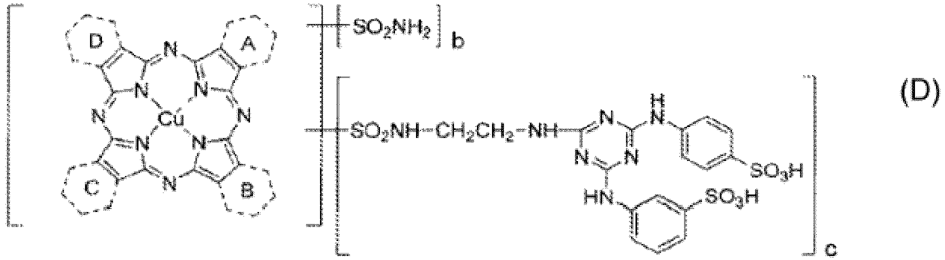 wherein 0.25 of ring A through ring D of formula (D) is a pyridine ring and the remaining 3.75 of ring A through ring D is a benzene ring, b is 2.91, and c is 0.84;
or wherein 0.65 of ring A through ring D of formula (D) is a pyridine ring and the remaining 3.35 of ring A through ring D is a benzene ring, b is 2.49, and c is 0.86;
or wherein 0.75 of ring A through ring D of formula (D) is a pyridine ring and the remaining 3.25 of ring A through ring D is a benzene ring, b is 2.42, and c is 0.83;
or wherein 0.85 of ring A through ring D of formula (D) is a pyridine ring and the remaining 3.15 of ring A through ring D is a benzene ring, b is 2.31, and c is 0.84.

13. The ink system as defined in any of claims 11 and 12, further comprising a printer in which the first, second, and third ink chambers are operatively positioned, the printer being selected from thermal inkjet printers, piezoelectric inkjet printers, continuous inkjet printers, and combinations thereof.

## Patentansprüche

1. Tintensatz, Folgendes umfassend:
eine gelbe Tinte, einschließlich eines gelben Farbstoffs, wobei die gelbe Tinte eine maximale Absorbtion λₘₐₓ im sichtbaren Bereich aufweist, die von 0,25 bis 0,45 reicht, falls gemessen bei einer Wellenlänge, die von 387 nm bis 397 nm reicht, bei einer Verdünnung von 1 zu 5000 der gelben Tinte in entionisiertem Wasser, sofern 4 Gew.-% bis 8 Gew.-% des gelben Farbstoffs in der gelben Tinte vorliegen;
eine Magentatinte, einschließlich eines Magentafarbstoffs, wobei die Magentatinte eine maximale Absorbtion λₘₐₓ im sichtbaren Bereich aufweist, die von 0,2 bis 0,4 reicht, falls gemessen bei einer Wellenlänge, die von 528 nm bis 538 nm reicht, bei einer Verdünnung von 1 zu 5000 der Magentatinte in entionisiertem Wasser, sofern 4,5 Gew.-% bis 9 Gew.-% des Magentafarbstoffs in der Magentatinte vorliegen; und
eine Cyantinte, einschließlich eines Cyanfarbstoffs, wobei die Cyantinte eine maximale Absorbtion λₘₐₓ im sichtbaren Bereich aufweist, die von 0,15 bis 0,4 reicht, falls gemessen bei einer Wellenlänge, die von 606 nm bis 617 nm reicht, bei einer Verdünnung von 1 zu 5000 der Cyantinte in entionisiertem Wasser, sofern 3 Gew.-% bis 8 Gew.-% des Cyanfarbstoffs in der Cyantinte vorliegen,
wobei jede der Magentatinte und der gelben Tinte ferner jeweils ein Tintenvehikel enthalten, das Folgendes umfasst:
ein organisches Lösungsmittel, ausgewählt aus 2-Pyrrolidon, 1-(2-Hydroxylethyl)-2-pyrrolidon oder einer Kombination daraus, wobei das organische Lösungsmittel in dem Tintenvehikel in einer Menge von über 0 Gew.-% bis 8 Gew.-% vorliegt;
wenigstens ein anderes organisches Lösungsmittel, das in dem Tintenvehikel in einer Menge von 10 Gew.-% bis 20 Gew.-% vorliegt;
wenigstens ein Tensid, das in dem Tintenvehikel in einer Menge von 1 Gew.-% bis 5 Gew.-% vorliegt; und
Wasser; und
wobei die Cyantinte ferner ein Tintenvehikel enthält, Folgendes umfassend:
ein organisches Lösungsmittel, ausgewählt aus 1-(2-Hydroxyethyl)-2-pyrrolidon, wobei das organische Lösungsmittel in dem Tintenvehikel in einer Menge von 3 Gew.-% bis 8 Gew.-% vorliegt;
wenigstens ein anderes organisches Lösungsmittel, das in dem Tintenvehikel in einer Menge von 10 Gew.-% bis 20 Gew.-% vorliegt;
wenigstens ein Tensid, das in dem Tintenvehikel in einer Menge von 1 Gew.-% bis 5 Gew.-% vorliegt; und
Wasser.

2. Tintensatz nach Anspruch 1, wobei der gelbe Farbstoff ausgewählt ist aus einem Azofarbstoff mit der folgenden Formel (A):

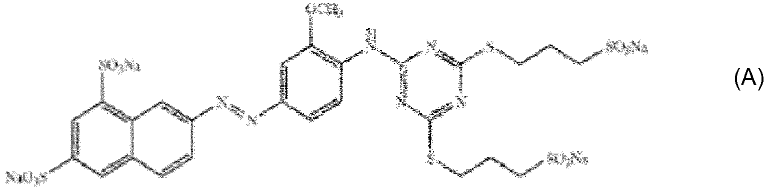

3. Tintensatz nach Anspruch 1, wobei der Magentafarbstoff ausgewählt ist aus einem Anthrapyridonfarbstoff mit der folgenden Formel (B):

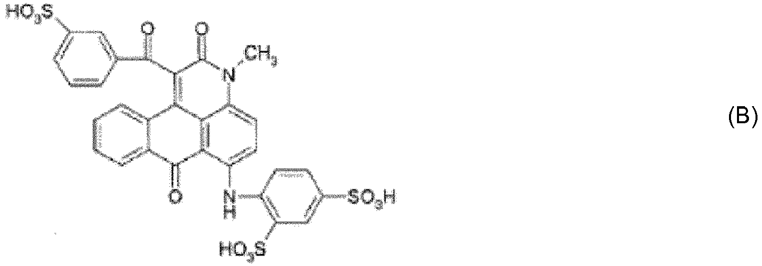

4. Tintensatz nach Anspruch 1, wobei der Cyanfarbstoff ein Pyridin-Carbonsäure-substituierter Kupfer-Phthalocyaninfarbstoff mit der Formel (D) ist: 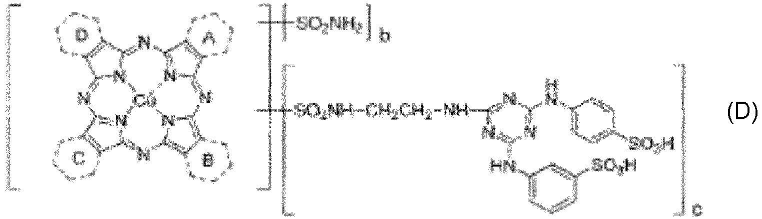 wobei 0,25 von Ring A bis Ring D ein Pyridinring ist und die verbleibenden 3,75 von Ring A bis Ring D ein Benzolring sind, b 2,91 ist und c 0,84 ist;
oder wobei 0,65 von Ring A bis Ring D ein Pyridinring ist und die verbleibenden 3,35 von Ring A bis Ring D ein Benzolring sind, b 2,49 ist und c 0,86 ist;
oder wobei 0,75 von Ring A bis Ring D ein Pyridinring ist und die verbleibenden 3,25 von Ring A bis Ring D ein Benzolring sind, b 2,42 ist und c 0,83 ist;
oder wobei 0,85 von Ring A bis Ring D ein Pyridinring ist und die verbleibenden 3,15 von Ring A bis Ring D ein Benzolring sind, b 2,31 ist und c 0,84 ist.

5. Tintensatz nach Anspruch 1, wobei das Tintenvehikel ferner ein Ausfällungsmittel umfasst, das in dem Tintenvehikel in einer Menge von 0 Gew.-% bis 4 Gew.-% vorliegt.

6. Tintensatz nach Anspruch 1, wobei ein oder mehrere Tintenvehikel der Magentatinte, der gelben Tinte und der Cyantinte ferner wenigstens ein Additiv umfassen, ausgewählt aus einem Biozid, einem Chelatbildner und einem Puffermittel.

7. Tintensatz, Folgendes umfassend:
eine gelbe Tinte, einschließlich eines gelben Farbstoffs, ausgewählt aus einem Azofarbstoff mit der Formel (A): 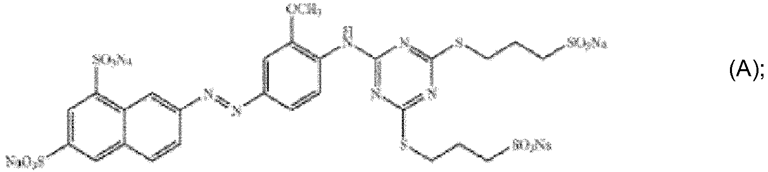
eine Magentatinte, einschließlich eines Magentafarbstoffs, ausgewählt aus einem Anthrapyridonfarbstoff mit der Formel (B): 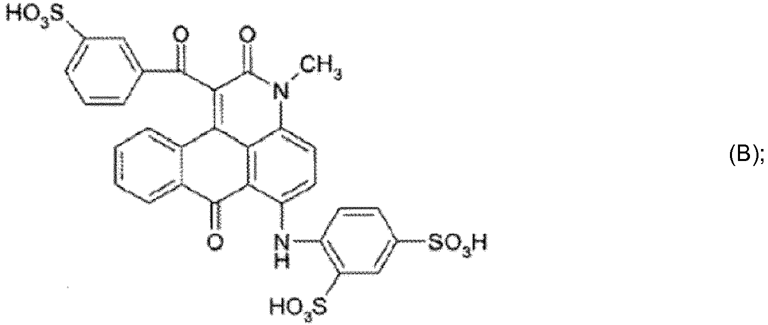 und
eine Cyantinte, ausgewählt aus einem Pyridin-Carbonsäure-substituierten Kupfer-Phthalocyaninfarbstoff mit der Formel (C): 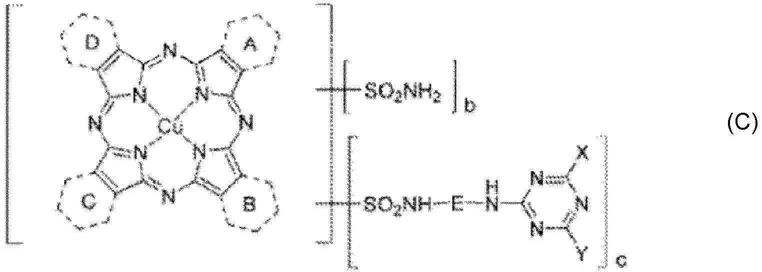 wobei: i) Ringe A bis D unabhängig Benzolringe oder 6-gliedrige, Stickstoff enthaltende heterocyclische aromatische Ringe darstellen, kondensiert zu einem Porphyrazinring, und die mittlere Anzahl von Stickstoff enthaltenden heterocyclischen aromatischen Ringen größer als 0, aber kleiner als 1 ist, wobei die übrigen Benzolringe sind; ii) E eine Alkylengruppe ist; iii) X und Y unabhängig Anilingruppen oder Naphthylaminogruppen sind, die unabhängig wenigstens eine Sulfagruppe, eine Carboxygruppe oder eine Phosphonsäuregruppe als Substituenten aufweisen; iv) der Mittelwert von b größer oder gleich 0, aber kleiner als 3,9 ist, der Mittelwert von c größer oder gleich 0,1, aber kleiner als 4 ist und der Mittelwert der Summe aus b und c größer oder gleich 3, aber kleiner als 4 ist.

8. Tintensatz nach Anspruch 7, wobei die Anilingruppen oder die Naphthylaminogruppen wenigstens einen weiteren Substituenten enthalten, ausgewählt aus der Gruppe bestehend aus Sulfogruppen, Carboxygruppen, Phosphonsäuregruppen, Sulfamoylgruppen, Carbamoylgruppen, Hydroxygruppen, Alkoxygruppen, Aminogruppen, Monoalkylaminogruppen, Dialkylaminogruppen, Monoarylaminogruppen, Diarylaminogruppen, Acetylaminogruppen, Ureidgruppen, Alkylgruppen, Nitrogruppen, Cyanogruppen, Halogenatomen, Alkylsulfonylgruppen, Alkylthiogruppen, Aryloxygruppen und heterocyclischen Gruppen.

9. Tintensatz nach einem der Ansprüche 7 und 8, wobei der Magentafarbstoff in der Magentatinte in einer Menge von 4,5 Gew.-% bis 9 Gew.-% vorliegt und der gelbe Farbstoff in der gelben Tinte in einer Menge von 4 Gew.-% bis 8 Gew.-% vorliegt und wobei die Magentatinte und die gelbe Tinte jeweils ferner ein Tintenvehikel enthalten, das Folgendes umfasst:
1,5-Pentandiol, das in dem Tintenvehikel in einer Menge von 6 Gew.-% bis 10 Gew.-% vorliegt;
Trimethylolpropan, das in dem Tintenvehikel in einer Menge von 5 Gew.-% bis 10 Gew.-% vorliegt;
2-Pyrrolidon, 1-(2-Hydroxylethyl)-2-pyrrolidon oder eine Kombination daraus, das/die in dem Tintenvehikel in einer Menge vorliegt, die von über 0 Gew.-% bis 8 Gew.-% reicht;
wenigstens ein nichtionisches Tensid, das in dem Tintenvehikel in einer Menge von 1 Gew.-% bis 5 Gew.-% vorliegt; und
Wasser;
und wobei der Cyanfarbstoff in der Cyantinte in einer Menge vorliegt, die von 3 Gew.-% bis 8 Gew.-% reicht und wobei die Cyantinte ferner ein Tintenvehikel enthält, Folgendes umfassend:
1,5-Pentandiol, das in dem Tintenvehikel in einer Menge von 6 Gew.-% bis 10 Gew.-% vorliegt;
Trimethylolpropan, das in dem Tintenvehikel in einer Menge von 5 Gew.-% bis 10 Gew.-% vorliegt;
1-(2-Hydroxyethyl)-2-pyrrolidon, das in dem Tintenvehikel in einer Menge von 3 Gew.-% bis 8 Gew.-% vorliegt;
wenigstens ein nichtionisches Tensid, das in dem Tintenvehikel in einer Menge von 1 Gew.-% bis 5 Gew.-% vorliegt; und
Wasser.

10. Tintensatz nach einem der Ansprüche 7 bis 9, wobei E im Cyanfarbstoff mit der Formel (C) Ethylen ist, X eine 3-Sulfoanilinogruppe ist und Y eine 4-Sulfoanilinogruppe ist, wodurch sich die Formel (D) ergibt: 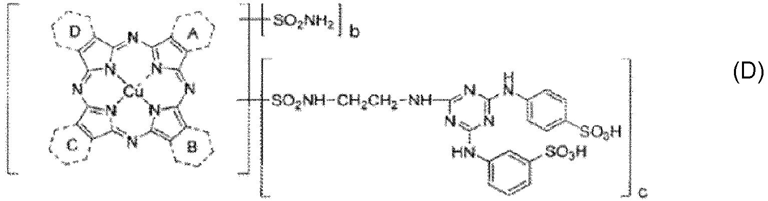 wobei 0,25 von Ring A bis Ring D mit der Formel (D) ein Pyridinring ist und die verbleibenden 3,75 von Ring A bis Ring D ein Benzolring sind, b 2,91 ist und c 0,84 ist;
oder wobei 0,65 von Ring A bis Ring D mit der Formel (D) ein Pyridinring ist und die verbleibenden 3,35 von Ring A bis Ring D ein Benzolring sind, b 2,49 ist und c 0,86 ist;
oder wobei 0,75 von Ring A bis Ring D mit der Formel (D) ein Pyridinring ist und die verbleibenden 3,25 von Ring A bis Ring D ein Benzolring sind, b 2,42 ist und c 0,83 ist;
oder wobei 0,85 von Ring A bis Ring D mit der Formel (D) ein Pyridinring ist und die verbleibenden 3,15 von Ring A bis Ring D ein Benzolring sind, b 2,31 ist und c 0,84 ist.

11. Tintensystem, Folgendes umfassend:
eine erste Tintenkammer einschließlich einer gelben Tinte, Folgendes umfassend:
einen gelben Farbstoff, ausgewählt aus einem Azofarbstoff mit der Formel (A): 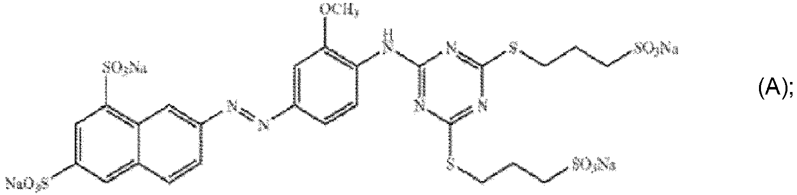 und
ein erstes Tintenvehikel, Folgendes umfassend:
1,5-Pentandiol, das in dem Tintenvehikel in einer Menge von 6 Gew.-% bis 10 Gew.-% vorliegt;
Trimethylolpropan, das in dem Tintenvehikel in einer Menge von 5 Gew.-% bis 10 Gew.-% vorliegt%,
2-Pyrrolidon, 1-(2-Hydroxylethyl)-2-pyrrolidon oder eine Kombination daraus, das/die in dem Tintenvehikel in einer Menge vorliegt, die von über 0 Gew.-% bis 8 Gew.-% reicht;
wenigstens ein nichtionisches Tensid, das in dem Tintenvehikel in einer Menge von 1 Gew.-% bis 5 Gew.-% vorliegt; und
Wasser; und
eine zweite Tintenkammer einschließlich einer Magentatinte, Folgendes umfassend:
einen Magentafarbstoff, ausgewählt aus einem Anthrapyridonfarbstoff mit der Formel (B): 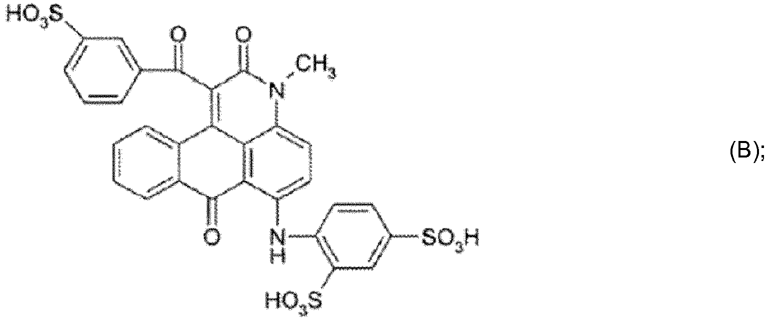 und
ein zweites Tintenvehikel, Folgendes umfassend:
1,5-Pentandiol, das in dem Tintenvehikel in einer Menge von 6 Gew.-% bis 10 Gew.-% vorliegt;
Trimethylolpropan, das in dem Tintenvehikel in einer Menge von 5 Gew.-% bis 10 Gew.-% vorliegt;
2-Pyrrolidon, 1-(2-Hydroxylethyl)-2-pyrrolidon oder eine Kombination daraus, das/die in dem Tintenvehikel in einer Menge vorliegt, die von über 0 Gew.-% bis 8 Gew.-% reicht;
wenigstens ein nichtionisches Tensid, das in dem Tintenvehikel in einer Menge von 1 Gew.-% bis 5 Gew.-% vorliegt; und
Wasser; und
eine dritte Tintenkammer einschließlich einer Cyantinte, Folgendes umfassend:
einen Cyanfarbstoff, ausgewählt aus einem Pyridin-Carbonsäure-substituierten Kupfer-Phthalocyaninfarbstoff mit der Formel (C): 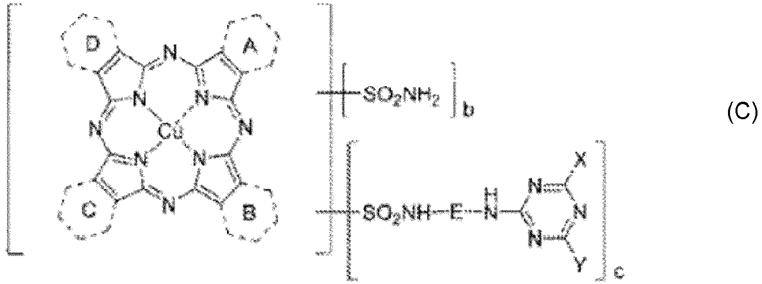 wobei: i) Ringe A bis D unabhängig Benzolringe oder 6-gliedrige, Stickstoff enthaltende heterocyclische aromatische Ringe darstellen, kondensiert zu einem Porphyrazinring, und die mittlere Anzahl von Stickstoff enthaltenden heterocyclischen aromatischen Ringen größer als 0, aber kleiner als 1 ist, wobei die übrigen Benzolringe sind; ii) E eine Alkylengruppe ist; iii) X und Y unabhängig Anilingruppen oder Naphthylaminogruppen sind, die wenigstens eine Sulfogruppe, eine Carboxygruppe oder eine Phosphonsäuregruppe als Substituenten aufweisen; iv) der Mittelwert von b größer oder gleich 0, aber kleiner als 3,9 ist, der Mittelwert von c größer oder gleich 0,1, aber kleiner als 4 ist und der Mittelwert der Summe aus b und c größer oder gleich 3, aber kleiner als 4 ist; und
ein drittes Tintenvehikel, Folgendes umfassend:
1,5-Pentandiol, das in dem Tintenvehikel in einer Menge von 6 Gew.-% bis 10 Gew.-% vorliegt;
Trimethylolpropan, das in dem Tintenvehikel in einer Menge von 5 Gew.-% bis 10 Gew.-% vorliegt;
1-(2-Hydroxyethyl)-2-pyrrolidon, das in dem Tintenvehikel in einer Menge von 3 Gew.-% bis 8 Gew.-% vorliegt;
wenigstens ein nichtionisches Tensid, das in dem Tintenvehikel in einer Menge von 1 Gew.-% bis 5 Gew.-% vorliegt; und
Wasser.

12. Tintensatz nach Anspruch 11, wobei E im Cyanfarbstoff mit der Formel (C) Ethylen ist, X eine 3-Sulfoanilinogruppe ist und Y eine 4-Sulfoanilinogruppe ist, wodurch sich die Formel (D) ergibt: 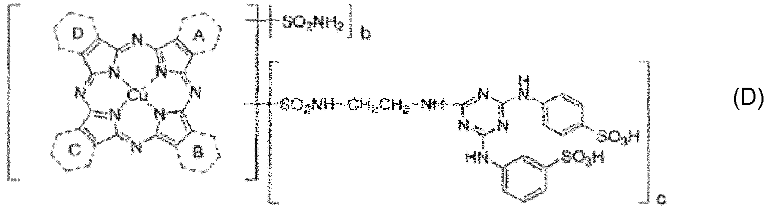 wobei 0,25 von Ring A bis Ring D mit der Formel (D) ein Pyridinring ist und die verbleibenden 3,75 von Ring A bis Ring D ein Benzolring sind, b 2,91 ist und c 0,84 ist;
oder wobei 0,65 von Ring A bis Ring D mit der Formel (D) ein Pyridinring ist und die verbleibenden 3,35 von Ring A bis Ring D ein Benzolring sind, b 2,49 ist und c 0,86 ist;
oder wobei 0,75 von Ring A bis Ring D mit der Formel (D) ein Pyridinring ist und die verbleibenden 3,25 von Ring A bis Ring D ein Benzolring sind, b 2,42 ist und c 0,83 ist;
oder wobei 0,85 von Ring A bis Ring D mit der Formel (D) ein Pyridinring ist und die verbleibenden 3,15 von Ring A bis Ring D ein Benzolring sind, b 2,31 ist und c 0,84 ist.

13. Tintensystem nach einem der Ansprüche 11 und 12, ferner umfassend einen Drucker, in dem die erste, die zweite und die dritte Tintenkammer funktionsfähig angeordnet sind, wobei der Drucker ausgewählt ist aus Thermo-Tintenstrahldruckern, piezoelektrischen Tintenstrahldruckern, Continuous-Inkjet-Druckern und Kombinationen daraus.

## Revendications

1. Ensemble encre, comprenant:
une encre jaune comprenant un colorant jaune, le colorant jaune ayant une absorption maximale λₘₐₓ dans la région visible allant de 0,25 à 0,45 lorsqu'elle est mesurée à une longueur d'onde allant de 387 nm à 397 nm à une dilution de 1 pour 5 000 de l'encre jaune dans de l'eau désionisée lorsque 4 % en poids à 8 % en poids du colorant jaune est présent dans l'encre jaune ;
une encre magenta comprenant un colorant magenta, l'encre magenta ayant une absorption maximale λₘₐₓ dans la région visible allant de 0,2 à 0,4 lorsqu'elle est mesurée à une longueur d'onde allant de 528 nm à 538 nm à une dilution de 1 pour 5 000 de l'encre magenta dans de l'eau désionisée lorsque 4,5 % en poids à 9 % en poids du colorant magenta est présent dans l'encre magenta ; et
une encre cyan comprenant un colorant cyan, l'encre cyan ayant une absorption maximale λₘₐₓ dans la région visible allant de 0,15 à 0,4 lorsqu'elle est mesurée à une longueur d'onde allant de 606 nm à 617 nm à une dilution de 1 pour 5 000 de l'encre cyan dans de l'eau désionisée lorsque 3 % en poids à 8 % en poids du colorant cyan est présent dans l'encre cyan,
dans lequel chacune de l'encre magenta et de l'encre jaune comprennent individuellement en outre un véhicule d'encre comprenant :
un solvant organique sélectionné parmi le 2-pyrrolidone, le 1-(2-hydroxyléthyl)-2-pyrrolidone, ou une combinaison de ceux-ci, le solvant organique étant présent dans le véhicule d'encre dans une quantité allant de plus de 0 % en poids à 8 % en poids ;
au moins un autre solvant organique présent dans le véhicule d'encre dans une quantité allant de 10 % en poids à 20 % en poids ;
au moins un tensioactif présent dans le véhicule d'encre dans une quantité allant de 1 % en poids à 5 % en poids ; et
de l'eau ; et
dans lequel l'encre cyan comprend en outre un véhicule d'encre comprenant :
un solvant organique sélectionné parmi le 1-(2-hydroxyéthyl)-2-pyrrolidone, le solvant organique étant présent dans le véhicule d'encre dans une quantité allant de 3 % en poids à 8 % en poids ;
au moins un autre solvant organique présent dans le véhicule d'encre dans une quantité allant de 10 % en poids à 20 % en poids ;
au moins un tensioactif présent dans le véhicule d'encre dans une quantité allant de 1 % en poids à 5 % en poids ; et
de l'eau.

2. Ensemble encre selon la revendication 1 dans lequel le colorant jaune est sélectionné parmi un colorant azoïque ayant la formule (A) :

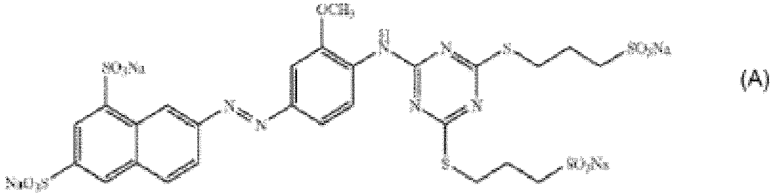

3. Ensemble encre selon la revendication 1 dans lequel le colorant magenta est sélectionné parmi un colorant anthrapyridone ayant la formule (B) :

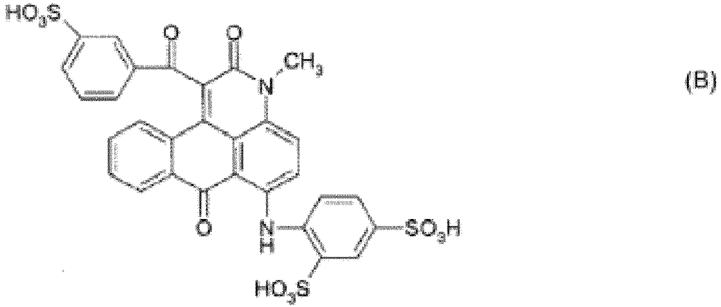

4. Ensemble encre selon la revendication 1 dans lequel le colorant cyan est un acide carboxylique de pyridine substitué de colorant pthalocyanine de cuivre ayant la formule (D) : 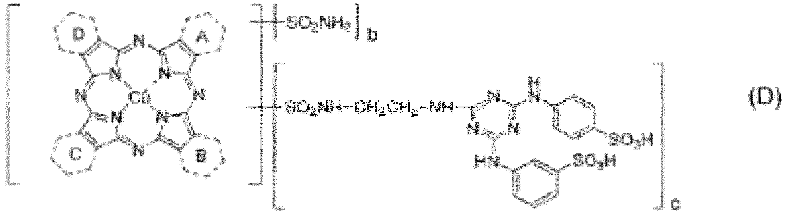 dans lequel 0,25 de l'anneau A par l'anneau D est un anneau de pyridine et les 3,75 restants de l'anneau A par l'anneau D est un anneau de benzène, b est égal à 2,91, et c est égal à 0,84 ;
ou dans lequel 0,65 de l'anneau A par l'anneau D est un anneau de pyridine et les 3,35 restants de l'anneau A par l'anneau D est un anneau de benzène, b est égal à 2,49, et c est égal à 0,86 ;
ou dans lequel 0,75 de l'anneau A par l'anneau D est un anneau de pyridine et les 3,25 restants de l'anneau A par l'anneau D est un anneau de benzène, b est égal à 2,42, et c est égal à 0,83 ;
ou dans lequel 0,85 de l'anneau A par l'anneau D est un anneau de pyridine et les 3,15 restants de l'anneau A par l'anneau D est un anneau de benzène, b est égal à 2,31, et c est égal à 0,84.

5. Ensemble encre selon la revendication 1 dans lequel le véhicule d'encre comprend en outre un agent de précipitation dans le véhicule d'encre dans une quantité allant de 0 % en poids à 4 % en poids.

6. Ensemble encre selon la revendication 1 dans lequel un ou plusieurs des véhicules d'encre de l'encre magenta, de l'encre jaune, et de l'encre cyan comprend en outre au moins un additif sélectionné parmi un biocide, un agent de chélation, et un agent tampon.

7. Ensemble encre, comprenant:
une encre jaune comprenant un colorant jaune sélectionné parmi un colorant azoïque ayant la formule (A) : 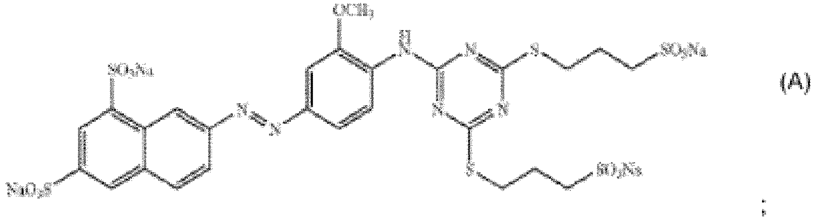
une encre magenta comprenant un colorant magenta sélectionné parmi un colorant anthrapyridone ayant la formule (B) : 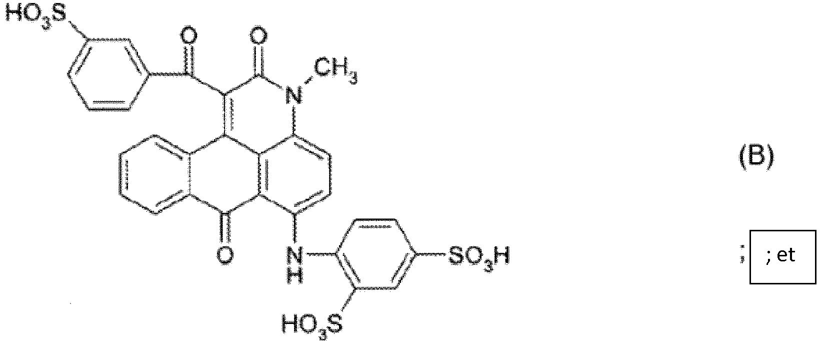
une encre cyan sélectionné parmi un acide carboxylique de pyridine substitué de colorant pthalocyanine de cuivre ayant la formule (C) : 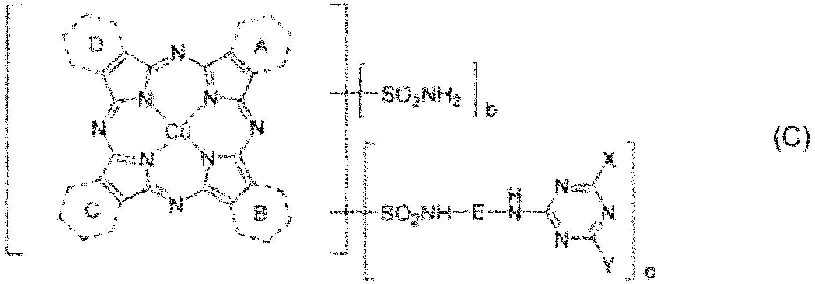 dans lequel : i) les anneaux A à D représentent indépendamment des anneaux de benzène ou des anneaux aromatiques hétérocycliques contenant de l'azote à 6 chaînons condensés en un anneau de porphyrazine, et le nombre moyen d'anneaux aromatiques hétérocycliques contenant de l'azote est supérieur à 0 mais inférieur à 1 tandis que les autres sont des anneaux de benzène; ii) E est un groupe alkylène ; iii) X et Y sont indépendamment des groupes aniline ou des groupes naphthylamino ayant indépendamment au moins un groupe sulfa, un groupe carboxy, ou un groupe acide phosphonique comme substituant ; iv) la valeur moyenne de b est supérieure ou égale à 0 mais inférieure à 3,9, la valeur moyenne de c est supérieure ou égale à 0,1 mais inférieure à 4, et la valeur moyenne de la somme de b et c est supérieure ou égale à 3 mais inférieure à 4.

8. Ensemble encre selon la revendication 7 dans lequel les groupes aniline ou les groupes naphthylamino comprennent au moins un substituant supplémentaire sélectionné parmi des groupes sulfo, des groupes carboxy, des groupes acide phosphonique, des groupes sulfamoyle, des groupes carbamoyle, des groupes hydroxy, des groupes alkoxy, des groupes amino, des groupes monoalkylamino, des groupes dialkylamino, des groupes monoarylamino, des groupes diarylamino, des groupes acétylamino, des groupes uréide, des groupes alkyle, des groupes nitro, des groupes cyano, des atomes d'halogène, des groupes alkylsulfonyle, des groupes alkylthio, des groupes aryloxy, et des groupes hétérocycliques.

9. Ensemble encre tel que défini selon l'une quelconque des revendications 7 et 8, dans lequel le colorant magenta est présent dans l'encre magenta dans une quantité allant de 4,5 % en poids à 9 % en poids et le colorant jaune est présent dans l'encre jaune dans une quantité allant de 4 % en poids à 8 % en poids, et dans lequel l'encre magenta et l'encre jaune incluent en outre et individuellement un véhicule d'encre comprenant :
le 1,5-pentanediol présent dans le véhicule d'encre dans une quantité allant de 6 % en poids à 10 % en poids ;
le triméthylolpropane présent dans le véhicule d'encre dans une quantité allant de 5 % en poids à 10 % en poids ;
le 2-pyrrolidone, du 1-(2-hydroxyéthyl)-2-pyrrolidone, ou une combinaison de ceux-ci présents dans le véhicule d'encre dans une quantité allant de plus de 0 % en poids à 8 % en poids ;
au moins un tensioactif non-ionique présent dans le véhicule d'encre dans une quantité allant de 1 % en poids à 5 % en poids ; et
de l'eau ;
et dans lequel le colorant cyan est présent dans l'encre cyan dans une quantité allant de 3 % en poids à 8 % en poids, et dans lequel l'encre cyan inclut en outre un véhicule d'encre comprenant :
le 1,5-pentanediol présent dans le véhicule d'encre dans une quantité allant de 6 % en poids à 10 % en poids ;
le triméthylolpropane présent dans le véhicule d'encre dans une quantité allant de 5 % en poids à 10 % en poids ;
le 1-(2-hydroxyéthyl)-2-pyrrolidone présent dans le véhicule d'encre dans une quantité allant de 3 % en poids à 8 % en poids ;
au moins un tensioactif non-ionique présent dans le véhicule d'encre dans une quantité allant de 1 % en poids à 5 % en poids ; et
de l'eau.

10. Ensemble encre tel que défini selon l'une quelconque des revendications 7 à 9, dans lequel E du colorant cyan de la formule (C) est de l'éthylène, X un groupe 3-sulfoanilino et Y un groupe 4-sulfoanilino, rendant ainsi la formule (D) : 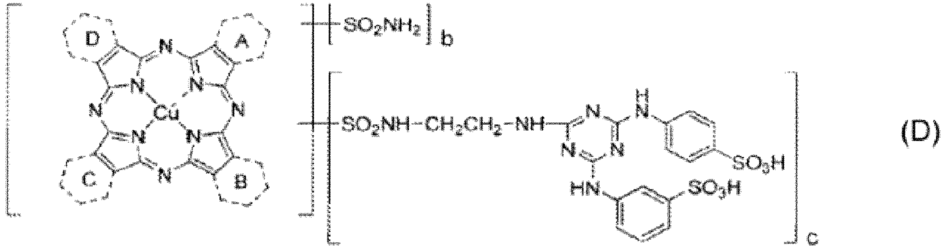 dans lequel 0,25 de l'anneau A par l'anneau D de la formule (D) est un anneau de pyridine et les 3,75 restants de l'anneau A par l'anneau D est un anneau de benzène, b est égal à 2,91 et c est égal à 0,84 ;
ou dans lequel 0,65 de l'anneau A par l'anneau D de la formule (D) est un anneau de pyridine et les 3,35 restants de l'anneau A par l'anneau D est un anneau de benzène, b est égal à 2,49 et c est égal à 0,86 ;
ou dans lequel 0,75 de l'anneau A par l'anneau D de la formule (D) est un anneau de pyridine et les 3,25 restants de l'anneau A par l'anneau D est un anneau de benzène, b est égal à 2,42 et c est égal à 0,83 ;
ou dans lequel 0,85 de l'anneau A par l'anneau D de la formule (D) est un anneau de pyridine et les 3,15 restants de l'anneau A par l'anneau D est un anneau de benzène, b est égal à 2,31 et c est égal à 0,84.

11. Système d'encre comprenant :
un premier compartiment à encre incluant une encre jaune, comprenant :
un colorant jaune sélectionné parmi un colorant azoïque de formule (A) : 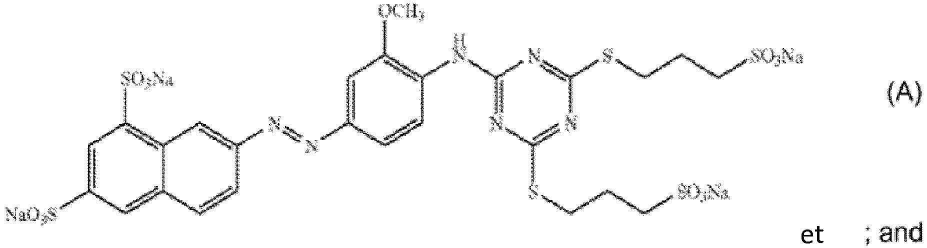
un premier véhicule d'encre comprenant :
le 1,5-pentanediol présent dans le véhicule d'encre dans une quantité allant de 6 % en poids à 10 % en poids ;
le triméthylolpropane présent dans le véhicule d'encre dans une quantité allant de 5 % en poids à 10 % en poids ;
le 2-pyrrolidone, du 1-(2-hydroxyéthyl)-2-pyrrolidone, ou une combinaison de ceux-ci présents dans le véhicule d'encre dans une quantité allant de plus de 0 % en poids à 8 % en poids;
au moins un tensioactif non-ionique présent dans le véhicule d'encre dans une quantité allant de 1 % en poids à 5 % en poids ; et
de l'eau ; et
un deuxième compartiment à encre incluant une encre magenta comprenant :
un colorant magenta sélectionné parmi un colorant anthrapyridone de formule (B) : 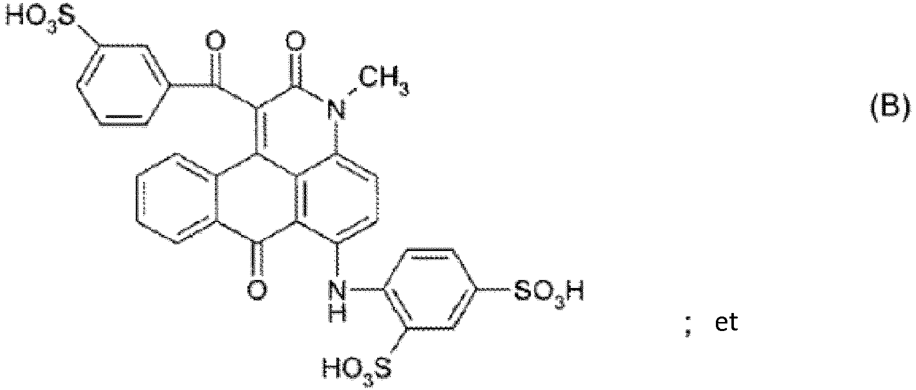
un deuxième véhicule d'encre comprenant :
le 1,5-pentanediol présent dans le véhicule d'encre dans une quantité allant de 6 % en poids à 10 % en poids ;
le triméthylolpropane présent dans le véhicule d'encre dans une quantité allant de 5 % en poids à 10 % en poids ;
le 2-pyrrolidone, le 1-(2-hydroxyéthyl)-2-pyrrolidone, ou une combinaison de ceux-ci présents dans le véhicule d'encre dans une quantité allant de plus de 0 % en poids à 8 % en poids;
au moins un tensioactif non-ionique présent dans le véhicule d'encre dans une quantité allant de 1 % en poids à 5 % en poids ; et
de l'eau ; et
un troisième compartiment à encre incluant une encre cyan comprenant :
un colorant cyan sélectionné parmi un colorant d'acide carboxylique de pyridine substitué de colorant phtalocyanine de cuivre de formule (C) : 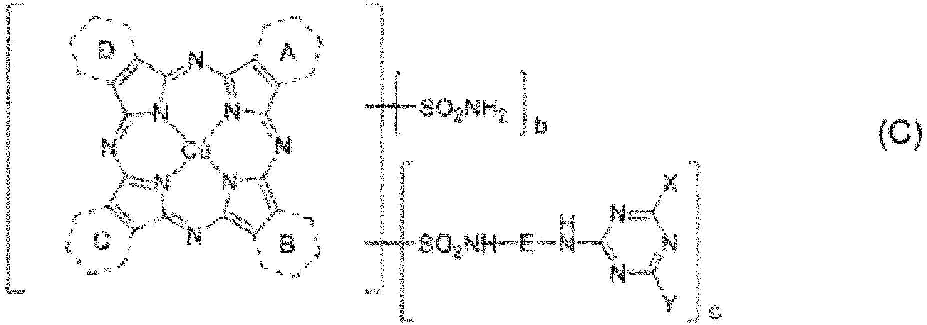
dans lequel : i) les anneaux A par D représentent indépendamment des anneaux de benzène ou des anneaux aromatiques hétérocycliques contenant de l'azote à six chaînons condensés en un anneau de porphyrazine, et le nombre moyen d'anneaux aromatiques hétérocycliques contenant de l'azote à six chaînons est supérieur à 0 mais inférieur à 1 tandis que le reste se compose d'anneaux de benzène ; ii) E est un groupe alkylène ; iii) X et Y sont indépendamment des groupes aniline ou des groupes naphthylamino possédant au moins un groupe sulfo, un groupe carboxy ou un groupe acide phosphonique en tant que substituant ; iv) la valeur moyenne de b est supérieure ou égale à zéro mais inférieure à 3,9, la valeur moyenne de c est supérieure ou égale à 0,1 mais inférieure à 4, et la valeur moyenne de la somme de b et de c est supérieure ou égale à 3 mais inférieure à 4 ; et
un troisième véhicule d'encre comprenant :
le 1,5-pentanediol présent dans le véhicule d'encre dans une quantité allant de 6 % en poids à 10 % en poids ;
le triméthylolpropane présent dans le véhicule d'encre dans une quantité allant de 5 % en poids à 10 % en poids ;
le 1-(2-hydroxyéthyl)-2-pyrrolidone présent dans le véhicule d'encre dans une quantité allant de 3 % en poids à 8 % en poids ;
au moins un tensioactif non-ionique présent dans le véhicule d'encre dans une quantité allant de 1 % en poids à 5 % en poids ; et
de l'eau.

12. Ensemble encre tel que défini selon la revendication 11, dans lequel E du colorant cyan de formule (C) est l'éthylène, X est un groupe 3-sulfoanilino et Y est un groupe 4-sulfoanilino, rendant ainsi la formule (D) : 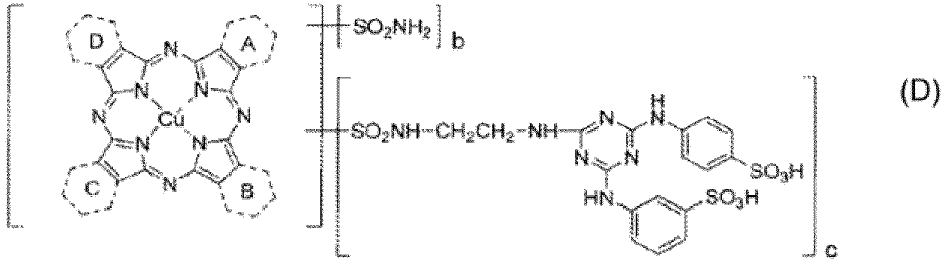 dans lequel 0,25 de l'anneau A par l'anneau D de la formule (D) est un anneau de pyridine et les 3,75 restants de l'anneau A par l'anneau D est un anneau de benzène, b est égal à 2,91 et c est égal à 0,84 ;
ou dans lequel 0,65 de l'anneau A par l'anneau D de la formule (D) est un anneau de pyridine et les 3,35 restants de l'anneau A par l'anneau D est un anneau de benzène, b est égal à 2,49 et c est égal à 0,86 ;
ou dans lequel 0,75 de l'anneau A par l'anneau D de la formule (D) est un anneau de pyridine et les 3,25 restants de l'anneau A par l'anneau D est un anneau de benzène, b est égal à 2,42 et c est égal à 0,83 ;
ou dans lequel 0,85 de l'anneau A par l'anneau D de la formule (D) est un anneau de pyridine et les 3,15 restant de l'anneau A par l'anneau D est un anneau de benzène, b est égal à 2,31 et c est égal à 0,84.

13. Système d'encre tel que défini selon l'une quelconque des revendications 11 et 12, comprenant en outre une imprimante dans laquelle le premier, deuxième et troisième compartiment à encre sont positionnés de manière opérationnelle, l'imprimante étant sélectionnée parmi les imprimantes à jet d'encre thermique, les imprimantes à jet d'encre piézoélectrique, les imprimantes à jet d'encre continu et des combinaisons de celles-ci.
